(19) Europäisches Patentamt
European Patent Office
Office européen des brevets

(11) EP 4 467 585 A1

(12) **EUROPÄISCHE PATENTANMELDUNG**

(43) Veröffentlichungstag:
**27.11.2024 Patentblatt 2024/48**

(21) Anmeldenummer: **23175386.4**

(22) Anmeldetag: **25.05.2023**

(51) Internationale Patentklassifikation (IPC):
***C08G 18/08*** (2006.01) ***C08G 18/12*** (2006.01)
***C08G 18/28*** (2006.01) ***C08G 18/32*** (2006.01)
***C08G 18/38*** (2006.01) ***C08G 18/42*** (2006.01)
***C08G 18/72*** (2006.01) ***C08G 18/79*** (2006.01)
***C08L 75/06*** (2006.01) ***C09J 175/06*** (2006.01)

(52) Gemeinsame Patentklassifikation (CPC):
(C-Sets verfügbar)
**C09J 175/06; C08G 18/0823; C08G 18/0828; C08G 18/12; C08G 18/283; C08G 18/3206; C08G 18/3228; C08G 18/3265; C08G 18/3855; C08G 18/4238; C08G 18/4263; C08G 18/722; C08G 18/797; C08L 75/06;** C08G 2170/80 (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
- **Thiebes, Christoph**
  **51061 Köln (DE)**
- **Fait, Thomas**
  **51063 Köln (DE)**
- **Fan, Zhirong**
  **40764 Langenfeld (DE)**
- **Arndt, Wolfgang**
  **41542 Dormagen (DE)**

(74) Vertreter: **Levpat**
**c/o Covestro AG**
**Gebäude K12**
**51365 Leverkusen (DE)**

(54) **REAKTIVKLEBSTOFF MIT VERBESSERTER OFFENER-ZEIT**

(57) Die Erfindung betrifft eine wässrige Klebstoffformulierung in Form einer wässrigen Dispersion enthaltend mindestens die folgenden dispergierten Komponenten: (A) mindestens ein Polymer ausgewählt aus der Gruppe bestehend aus Polyurethanpolymeren, Vinylpolymeren, Polyesterpolymeren und / oder Mischungen aus mindestens zwei davon, wobei das Polymer eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweist; (B) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 1,25 mg KOH / g bis 25 mg KOH /g, bestimmt gemäß DIN EN ISO 2114:2000 (2002-06, Verfahren A mit einem Aceton-Ethanol-Lösungsmittelgemisch), aufweist; (C) mindestens ein Polycarbodiimid, und/oder mindestens ein Polyaziridin und/oder eine Mischung davon, und (D) gegebenenfalls mindestens ein weiteres Polymer, welches von dem mindestens einen Polymer (A) und dem mindestens einen Polyurethanpolymer (B) verschieden ist. Weiterhin betrifft sie ein entsprechendes Kit-of-parts, ein Verfahren zur Herstellung der wässrigen Klebstoffformulierung, Verwendungen der Klebstoffformulierung und Artikel die unter Verwendung der Klebstoffformulierung hergestellt wurden.

EP 4 467 585 A1

(52) Gemeinsame Patentklassifikation (CPC): (Forts.)

C-Sets
**C08G 18/12, C08G 18/3228;**
**C08G 18/12, C08G 18/3265**

## Beschreibung

Die Erfindung betrifft eine wässrige Klebstoffformulierung in Form einer wässrigen Dispersion enthaltend mindestens die folgenden dispergierten Komponenten: (A) mindestens ein Polymer ausgewählt aus der Gruppe bestehend aus Polyurethanpolymeren, Vinylpolymeren, Polyesterpolymeren und / oder Mischungen aus mindestens zwei davon, wobei das Polymer eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweist; (B) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 1,25 mg KOH / g bis 25 mg KOH /g, bestimmt gemäß DIN EN ISO 2114:2000 (2002-06, Verfahren A mit einem Aceton-Ethanol-Lösungsmittelgemisch), aufweist; (C) mindestens ein Polycarbodiimid, und/oder mindestens ein Polyaziridin und/oder eine Mischung davon; und (D) gegebenenfalls mindestens ein weiteres Polymer, welches von dem mindestens einen Polymer (A) und dem mindestens einen Polyurethanpolymer (B) verschieden ist. Weiterhin betrifft sie ein entsprechendes Kit-of-parts, ein Verfahren zur Herstellung der wässrigen Klebstoffformulierung, Verwendungen der Klebstoffformulierung und Artikel die unter Verwendung der Klebstoffformulierung hergestellt wurden.

Klebstoffe auf Basis von wässrigen Polyurethan-Dispersionen haben sich weltweit in anspruchsvollen industriellen Anwendungen etabliert, zum Beispiel bei der Schuhfertigung, der Verklebungen von Möbelteilen, der Verklebung von Teilen für die KFZ-Innenausstattung, der Folienlaminierung oder der Verklebung von textilen Substraten. Die Herstellung wässriger Polyurethan bzw. Polyurethan-Polyharnstoff Dispersionen ist bekannt.

Bei der Verwendung solcher Dispersionen zum Kleben von Substraten wird häufig nach dem Thermoaktivierverfahren gearbeitet. Hierbei wird die Dispersion auf das Substrat aufgebracht, und nach vollständiger Verdunstung des Wassers wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur. Die in diesem Verfahren verwendeten Klebstoffe enthalten in vielen Fällen kristalline Anteile, die bei oder oberhalb der Aktiviertemperatur in geschmolzener Form vorliegen.

Klebstoffe auf Basis von wässrigen Polyurethan- bzw. Polyurethan-Polyharnstoff-Dispersionen, welche für die Anwendung des Thermoaktivierverfahrens geeignet sind, werden in der US-A 4 870 129 beschrieben. Danach können durch Verwendung spezieller Mischungen von Diisocyanaten und Polyolkomponenten nach dem Acetonverfahren wässrige Polyurethan- bzw. Polyurethan-Polyharnstoff-Dispersionen erhalten werden. Die daraus erhältlichen Filme weisen eine gute Aktivierbarkeit auf.

Bei der Verwendung von Polyurethan- bzw. Polyurethan-PolyharnstoffDispersionen kann aber auch nach dem Verfahren der Nassverklebung gearbeitet werden, d.h. die Durchführung der Verklebung erfolgt unmittelbar nach dem Klebstoffauftrag. Bis zum Abbinden des Klebstoffes ist eine mechanische Fixierung der zu verbindenden Teile erforderlich. Dieses Verfahren wird häufig zur Verklebung von Holz oder textilen Substraten verwendet.

US4870129A offenbart einen Klebstoff, der einen isocyanatgruppenhaltigen Vernetzer und eine Hydroxylgruppen haltige wässrige Polyurethandispersion enthält, wobei der Vernetzer die Vernetzungsdichte des Klebstoffs erhöht und dadurch die Hydrolysebeständigkeit der daraus gebildeten Beschichtung verbessert. Nachteilig ist jedoch, dass die Vernetzungsreaktion der Isocyanatgruppen mit Wasser und Hydroxylgruppen sofort nach der Herstellung der Klebstoffe einsetzt und daher diese Klebstoffe nur eine kurze Verarbeitungszeit, in der Regel wenige Stunden, aufweisen. Dies ist insofern ungünstig, weil ggf. hergestellte und nicht verbrauchte Klebstoffe nach Ablauf der Topfzeit nicht mehr verwendet werden können.

US6348548 offenbart die Verwendung einer wässrigen Dispersion, die mindestens ein festes oberflächenpassiviertes Polyisocyanat und mindestens ein isocyanatreaktives Polymer enthält, zur Herstellung einer potenziell aktiven Schicht oder eines Pulvers mit Lagerstabilität. Ein Nachteil dieser Vorgehensweise ist, dass sie eine Erwärmung über eine lange Zeit bei hoher Temperatur zur Aktivierung erfordert, nachdem die genannten Komponenten auf eine Substratoberfläche aufgebracht wurden. Sie eignet sich daher auch nicht für die Verklebung von Substraten, die durch Erhitzen auf erhöhte Temperaturen geschädigt werden können.

WO2020035573A1 beschreibt eine Klebstoffformulierung bestehend aus zumindest einer Polyurethandispersion, einem oberflächen-desaktivierten Feststoffisocyanat und einem Polycarbodiimid. Die Aktivierungstemperaturen können in diesem Fall gesenkt werden, jedoch ist die Verwendung von oberflächen-desaktivierten Feststoffisocyanaten wirtschaftlich nachteilig, weil diese aufwendig herzustellen und teuer sind. Weiterhin enthalten diese meist herstellungsbedingt Restmonomere von Diisocyanaten, welche aus Gründen der Arbeitshygiene nicht erwünscht sind.

Sowohl US2011/0244228 als auch CN106916273 offenbaren eine wässrige Polyurethan-Dispersion, die endständige und seitenständige Carboxylgruppen enthält. Die wässrige Polyurethan-Dispersion kann mit Polyarbodiimiden vernetzt werden, um die Hitzebeständigkeit der aus der wässrigen Polyurethan-Dispersion gebildeten Beschichtung zu erhöhen. Spezielle Abmischungen mit nicht-Carboxylgruppen enthaltenden Polymeren werden nicht explizit erwähnt.

Die Vernetzung erfolgt durch Reaktion der Carboxylgruppen im Polyurethanpolymer mit den Carbodiimidgruppen im Polycarbodiimid nach Filmbildung. Dies ist beispielsweise beschrieben in Meier-Westhues et al. Polyurethanes, 2nd edition, Vincentz Network Hannover, 2019 Seiten 342-343. Die "offene Zeit" wird hier mit "~1h" angegeben.

EP2186841A1 beschreibt dispergierte Polyurethane bzw. Polyurethan-Polyharnstoffe mit endständigen Carboxylgruppen und zusätzlich seitenständigen Sulfonat- und/oder Carboxylatgruppen. Der Fokus des Patents liegt in der Seitenständigkeit der Carboxyl- und Carboxylatgruppen. Abmischungen mit nicht-Carboxylgruppen enthaltenden Polymeren werden nicht explizit erwähnt.

Ein genereller Nachteil bei der Verwendung von Carboxylgruppen enthaltenden Polyesterpolyurethandispersionen ist die erhöhte Tendenz zur Hydrolyse der Polyestergruppen, die durch die Carboxylgruppen, insbesondere bei hohen Temperaturen, katalysiert wird. Der dadurch resultierende Abbau an Molekulargewicht führt in der Anwendung zu reduzierten Wärmebeständigkeiten. Dadurch sollten diese Produkte bei Temperaturen von unter 30 Grad °C gelagert und möglichst schnell verbraucht werden.

Mischungen von Polyurethan-Dispersionen sind bekannt. Beispielsweise werden in der US6797764B2 Mischungen spezieller polyesterbasierter Polyurethandispersionen enthaltend Sulfonatgruppen und wässrigen aliphatischen Polyurethandispersionen beschrieben. Diese weisen nach dem Thermoaktivierverfahren eine gute Haftfestigkeit auf einer Vielzahl von Metall- und Plastiksubstraten auf. Die Vernetzung mit Polycarbodiimiden oder Polyaziridinenwird nicht erwähnt.

US20160168434A1 beschreibt eine Klebstoffformulierung bestehend aus einer Mischung aus einer Polyurethandispersion 1 enthaltend ein Polyurethan mit isocyanatreaktiven Gruppen, sowie einer Polyurethandispersion 2 enthaltend ein Polyurethan mit Carboxylgruppen und weiteren isocyanatreaktiven Gruppen sowie einem oberflächen-desaktivierten Feststoffisocyanat. Die Verwendung des oberflächen-desaktivierten Feststoffisocyanates in den Klebstoffformulierungen ist notwendig, damit eine gute Haftung auf metallischen Substraten, erreicht werden kann. Die Verwendung von carboxylgruppenhaltigen Polyurethandispersionen wird beschrieben, eine gleichzeitige Verwendung von Vernetzern, die mit Säuregruppen reagieren können wird nicht erwähnt. Die Verwendung von Carboxylgruppen enthaltenden Polyurethanen zielt auf die verbesserte Haftung auf metallischen Substraten. Zum Erreichen des gewünschten Effektes ist eine sehr hohe Konzentration von Carboxylgruppen notwendig.

US20220177751A1 beschreibt latent-reaktive Klebstoffe auf Basis von kristallinen Polyurethan-dispersionen und Feststoff-Polycarbodiimiden. Auf die Verwendung nicht-Carboxylgruppen enthaltenden Polymerdispersionen neben Carboxylgruppen enthaltenden wird nicht explizit eingegangen. Aufgrund der Tendenz zur Sedimentation in Dispersion und dem Verblocken bei Lagerung ist die Verarbeitung und die Verwendung von festen Polycarbodiimiden nachteilig.

Der vorlegenden Erfindung lag daher die Aufgabe zugrunde, wässrige Klebstoffe auf Polyurethanbasis bereitzustellen, die sich für die Verwendung in Thermoaktivierverfahren mit niedrigen Aktiviertemperaturen und -dauern eignen, zu besonders hitzebeständigen Klebungen führen und die Nachteile des Standes der Technik überwinden, indem sie eine lange Topfzeit und offene Zeit aufweisen und ohne die Verwendung von oberflächen-deaktivierten Feststoffpolyisocyanaten, sowie mit einen reduzierten Anteil von Carbonsäuregruppen haltigen Polyesterpolyurethandispersionen auskommen.

Diese Aufgabe wird gelöst durch die erfindungsgemäße wässrige Klebstoffformulierung in Form einer wässrigen Dispersion enthaltend mindestens die folgenden dispergierten Komponenten:

(A) mindestens ein Polymer ausgewählt aus der Gruppe bestehend aus Polyurethanpolymeren, Vinylpolymeren, Polyesterpolymeren und / oder Mischungen aus mindestens zwei davon, wobei das Polymer eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweist;

(B) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 1,25 mg KOH / g bis 25 mg KOH /g, bestimmt gemäß DIN EN ISO 2114:2000 (2002-06, Verfahren A mit einem Aceton-Ethanol-Lösungsmittelgemisch), aufweist;

(C) mindestens ein Polycarbodiimid, und/oder mindestens ein Polyaziridin und/oder eine Mischung davon; und

(D) gegebenenfalls mindestens ein weiteres Polymer, welches von dem mindestens einen Polymer (A) und dem mindestens einen Polyurethanpolymer (B) verschieden ist.

Ebenfalls wird die Aufgabe gelöst durch das erfindungsgemäße Kit-of-parts zur Herstellung einer Klebstoffformulierung umfassend die folgenden Komponenten:

(A) mindestens ein Polymer ausgewählt aus der Gruppe bestehend aus Polyurethanpolymeren, Vinylpolymeren,

Polyesterpolymeren und / oder Mischungen aus mindestens zwei davon, wobei das Polymer eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweist;

(B) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 1,25 mg KOH / g bis 25 mg KOH /g, bestimmt gemäß DIN EN ISO 2114:2000 (2002-06, Verfahren A mit einem Aceton-Ethanol-Lösungsmittelgemisch) aufweist;

(C) mindestens ein Polycarbodiimid, mindestens ein Polyaziridin und/oder eine Mischung davon; und

(D) gegebenenfalls mindestens ein weiteres Polymer, welches von dem mindestens einen Polymer (A) und dem mindestens einen Polyurethanpolymer (B) verschieden ist.

Überraschend wurde gefunden, dass die beschriebenen erfindungsgemäßen Klebstoffformulierungen bestehend aus oder enthaltend wässrige Polymerdispersionen, vorzugsweise wässrige Polyurethan- bzw. Polyurethan-Polyharnstoff-Dispersionen in Kombination mit mindestens einem Polycarbodiimid, sich als Klebstoffe nach dem Thermoaktivierverfahren eignen und eine offene Zeit von mehreren Tagen bis Wochen aufweisen. Weiterhin wurde überraschend gefunden, dass sich mit dem erfindungsgemäßen Kit-of-parts eine erfindungsgemäße Klebstoffformulierung herstellen lässt.

Ebenfalls wurde überraschend gefunden, dass sich lagerstabile Vorbeschichtungen von Substratoberflächen, selbsttragende latent-reaktive Klebstofffolien oder reaktive Klebstoffpulver mit den erfindungsgemäßen Klebstoffformulierungen herstellen lassen. Hierdurch kann unter Anderem der in der verarbeitenden Industrie bestehende dringende Wunsch, den Klebstoffauftrag und den Fügeprozess räumlich und zeitlich voreinander zu trennen, erfüllt werden.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyisocyanat" gesprochen wird, ist das Wort "ein" lediglich als unbestimmter Artikel und nicht als Zahlwort aufzufassen, es ist also damit auch eine Ausführungsform umfasst, in der zwei oder mehr Polyisocyanate vorhanden sind die sich beispielsweise strukturell unterscheiden.

Unter "Polyurethanpolymer" werden in Sinne der Erfindung sowohl Polyurethanpolymere als auch Polyurethan-Harnstoffpolymere bzw. Polyurethan-Polyharnstoffpolymere verstanden.

Unter "wässrige Dispersion" wird im Sinne der Erfindung eine wässrige Dispersion, wässrige Emulsion, wässrige Suspension, oder ein Zwischenzustand/Zwischenform aus diesen verstanden, vorzugsweise eine wässrige Dispersion, wässrige Emulsion und/oder wässrige Suspension.

Besonders bevorzugt wird unter dem Begriff Dispersion eine wässrige Emulsion und/oder eine wässrige Suspension verstanden. Der Begriff "Polyurethandispersion" bezeichnet sowohl Polyurethan- als auch Polyurethan-(Poly)Harnstoff-Dispersionen.

Unter "offene Zeit" wird im Sinne der Erfindung die Zeit nach der Trocknung eines Klebstoffes verstanden, bei der der Klebstoff noch in der Lage ist, um unter den üblichen Bedingungen bei der wärmeinduzierten Klebung noch ausreichend zu fließen und eine Benetzung eines zu verklebenden Substrats unter moderatem Druck noch möglich ist, sodass z.B. eine hohe Verbundfestigkeit von verklebten Substraten erreicht werden kann

In Sinne der Erfindung zeichnen sich lagerstabile Vorbeschichtungen von Substratoberflächen, selbsttragende latent-reaktive Klebstofffolien oder reaktive Klebstoffpulver dadurch aus, dass sie sich nach Lagerung unter Normbedingungen (23 °C, 50% relativer Feuchte) nach mehr als 24h, besonders bevorzugt nach mehr als 7d noch geeignet sind, um unter den üblichen Bedingungen bei der wärmeinduzierten Klebung noch ausreichend zu Fließen und eine Benetzung eines zu verklebenden Substrats unter moderatem Druck noch möglich ist.

Üblicherweise wird bei der wärmeinduzierten Klebung der Klebstoff auf eine Temperatur zwischen 40 und 120 °C erhitzt und die Substrate mit einem moderaten Druck, beispielsweise 0,5 bis 10 bar verpresst.

Als teilkristallin oder kristallin wird erfindungsgemäß ein Polymer, insbesondere Polyurethanpolymer, bezeichnet, wenn es in der DSC-Messung nach DIN EN ISO 11357-1:2017 (2017-02) bei einer Aufheizrate von 20 K/min in der ersten Aufheizung einen Schmelzpeak aufweist. Der Schmelzpeak wird durch das Aufschmelzen regelmäßiger Teilstrukturen im Polymer, insbesondere Polyurethanpolymer, verursacht. Als teilkristallin wird erfindungsgemäß ein Polymer, insbesondere Polyurethanpolymer, bezeichnet, wenn es in der DSC-Messung nach DIN EN ISO 11357-1:2017 (2017-02) bei einer Aufheizrate von 20 K/min in der ersten Aufheizung einen Schmelzpeak aufweist und in der dritten Aufheizung einen Glasübergang aufweist.

Die Schmelztemperatur des in der erfindungsgemäßen Formulierung enthaltenen mindestens einen Polyurethanpolymers (B) liegt im Bereich von 35 bis 80 °C, bevorzugt 40 bis 70 °C, besonders bevorzugt 42 bis 55 °C. Die

Schmelzenthalpie des mindestens einen Polyurethanpolymers (B) ist ≥ 15 J/g. Das mindestens eine Polymer (A), vorzugsweise Polyurethanpolymer (A), weist vorzugsweise eine Glasübergangstemperatur von im Bereich von -100 °C bis 80 °C auf, sowie wenn das Polymer (A) vorzugsweise mindestens ein teilkristallines Polyurethanpolymer (A) ist, eine Schmelztemperatur im Bereich von 35 bis 80 °C und eine Schmelzenthalpie von ≥ 15 J/g. Die Schmelztemperatur und die Schmelzenthalpie werden bei der ersten Aufheizung ausgehend von einer Starttemperatur von -100 °C in der DSC-Messung nach DIN EN ISO 11357-1:2017 (2017-02) bei einer Aufheizrate von 20 K/min ermittelt. Die Glasübergangstemperatur wird bei der dritten Aufheizung ausgehend von einer Starttemperatur von -100 °C in der DSC-Messung nach DIN EN ISO 11357-1:2017 (2017-02) bei einer Aufheizrate von 20 K/min ermittelt. Bei der Anwendung der DIN EN ISO 11357-1:2017 wird zur Bestimmung der Glasübergangstemperatur der Normteil DIN EN ISO 11357-2:2020-08 und bei der Bestimmung der Schmelztemperatur und der Schmelzenthalpie der Normteil DIN EN ISO 11357-3:2018-07 mit herangezogen. Für die DSC-Messung von Polymeren, die in wässriger Dispersion vorliegen, erfolgt die Probennahme aus einem bei 23 °C und 50% relativer Luftfeuchte zur Gewichtskonstanz getrockneten und anschließend für 3 Tage bei 0% relativer Luftfeuchte in einer Trockenbox gelagerten Polymerfilm.

Bevorzugt bedeuten erfindungsgemäß die Ausdrücke "umfassend" oder "enthaltend", "im Wesentlichen bestehend aus" und besonders bevorzugt "bestehend aus". Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

In einer bevorzugten Ausführungsform weist die erfindungsgemäße wässrige Klebstoffformulierung eine partielle Säurezahl im Bereich von 0,5 mg KOH / g bis 10 mg KOH /g, vorzugsweise im Bereich von 1,0 mg KOH / g bis 10 mg KOH /g, besonders bevorzugt im Bereich von 2 mg KOH / g bis 6 mg KOH /g auf, bestimmt gemäß DIN EN ISO 2114:2000 (2002-06, Verfahren A mit einem Aceton-Ethanol-Lösungsmittelgemisch).

In einer bevorzugten Ausführungsform enthält die erfindungsgemäße wässrige Klebstoffformulierung

(A) 5 Gew.-% bis 85 Gew.-%, vorzugsweise 27 Gew.-% bis 80 Gew.-%, der Komponente (A),
(B) 10 Gew.-% bis 70 Gew.-%, vorzugsweise 17 Gew.-% bis 70 Gew.-%, der Komponente (B),
(C) 1 Gew.-% bis 30 Gew.-%, vorzugsweise 3 Gew.-% bis 20 Gew.-%, der Komponente (C), und
(D) 0 Gew.-% bis 30 Gew.-%, vorzugsweise 0 Gew.-% bis 25 Gew.-%, der Komponente (D),

wobei sich die Mengenanteile von (A), (B), (C) und (D) zu 100 Gew.-% addieren.

In einer bevorzugten Ausfuhrungsform ist die Summe der Mengen an den Komponenten (A), (B), (C) und gegebenenfalls (D) in der erfindungsgemäßen wässrigen Klebstoffformulierung mindestens 30 Gew.-%, vorzugsweise im Bereich von 30 Gew.-% bis 70 Gew.-%, besonders bevorzugt im Bereich von 35 Gew.-% bis 65 Gew.-%, noch bevorzugter im Bereich von 35 Gew.-% bis 65 Gew.-%, bezogen auf das Gesamtgewicht der wässrigen Klebstoffformulierung.

In einer bevorzugten Ausfuhrungsform enthält die erfindungsgemäße wässrige Klebstoffformulierung weiterhin gegebenenfalls mindestens einen Zusatzstoff, der verschieden von den Komponenten (A), (B), (C) und (D) ist.

In einer bevorzugten Ausfuhrungsform enthält die erfindungsgemäße Zusammensetzung organische Lösungsmittel in einer Konzentration von ≤ 5 Gew.-%, vorzugsweise ≤ 1 Gew.-% bezogen auf das Gesamtgewicht der wässrigen Klebstoffformulierung. In einer weiteren bevorzugten Ausfuhrungsform enthält die erfindungsgemäße Zusammensetzung kein Aceton und / oder organische polar aprotische Lösungsmittel.

Die einzelnen Komponenten der in der erfindungsgemäßen wässrigen Klebstoffformulierung enthaltenen Komponenten werden im Folgenden detailliert beschrieben.

**Komponente (A)**

Die erfindungsgemäße wässrige Klebstoffformulierung und das erfindungsgemäße Kit-of-parts enthalten als Komponente (A) mindestens ein Polymer ausgewählt aus der Gruppe bestehend aus Polyurethanpolymeren, Vinylpolymeren, Polyesterpolymeren und / oder Mischungen aus mindestens zwei davon, wobei das Polymer eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweist.

Im Falle, das mehrere Polymere als Komponente (A) vorliegen, weist die Mischung dieser Polymere eine durchschnittliche partielle Säurezahl von < 1,25 mg KOH / g, bestimmt gemäß DIN EN ISO 2114:2000 (2002-06, Verfahren A mit einem Aceton-Ethanol-Lösungsmittelgemisch), auf, wobei vorzugsweise jedes der Polymere in der Mischung eine

partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweist.

Im Allgemeinen kann in der erfindungsgemäßen Klebstoffformulierung jedes dem Fachmann bekannte Polymer eingesetzt werden ausgewählt aus der Gruppe bestehend aus Polyurethanpolymeren, Vinylpolymeren, Polyesterpolymeren und / oder Mischungen aus mindestens zwei davon.

Als Vinylpolymer eignen sich alle dem Fachmann bekannten Vinylpolymere welche eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweisen.

Unter einem "Vinylpolymer" ist im Sinne der Erfindung ein Polymer zu verstehen, das durch Additionspolymerisation [in der Regel durch ein freiradikalisches Verfahren (free-radical process)] mindestens eines ethylenisch ungesättigten Monomers entsteht. Unter einem Vinylmonomer wird hier also ein ethylenisch ungesättigtes Monomer verstanden. Ethylenisch ungesättigte(s) Monomer(e) umfassen vorzugsweise Olefine wie Ethylen oder Propylen, Vinylhalogenide wie Vinylidenchlorid und Vinylchlorid, ethylenisch ungesättigte Amide, Vinylester, Vinylether, ethylenisch ungesättigte Nitrile, heterocyclische Vinylverbindungen, Diester der Fumar- und Maleinsäure, Mono- und Diester der Itaconatsäure und insbesondere Ester der Acrylsäure und Methacrylsäure der Formel: $CH_2=CR^1CO_2R^2$ (1), wobei $R^1$ H oder Methyl ist und $R^2$ gegebenenfalls substituiertes Alkyl mit 1 bis 20 Kohlenstoffatomen (vorzugsweise 1 bis 8 Kohlenstoffatomen) oder Cycloalkyl mit 5 bis 12 Ringkohlenstoffatomen ist.

Spezifischere Beispiele für solche Monomere für geeignete Vinylpolymere sind Alkylester wie Methylacrylat, Ethylacrylat, Propylacrylat, n-Butylacrylat, i-Butylacrylat, t-Butylacrylat, 2-Octylacrylat, 2-Ethylhexylacrylat, Laurylacrylat, Isopropylacrylat, Cyclohexylacrylat, Methylmethacrylat, Ethylmethacrylat, n-Propylmethacrylat, Isopropylmethacrylat, n-Butylmethacrylat, i-Butylmethacrylat, t-Butylmethacrylat, Cyclohexylmethacrylat, 2-Ethylhexylmethacrylat, 2-Octylmethacrylat, Laurylmethacrylat, Diethylmaleat, Diethylfumarat; Vinylester wie Allylacetat, Allylchloracetat, Methallylacetat, Vinylacetat, Isopropenylacetat; Halogenide wie Vinylchlorid, Vinylidenchlorid, Allylchlorid, 1,2-Dichlorpropen-2, Methallylchlorid und Trichlorethylen; Nitrile wie Acrylnitril und Methacrylnitril; Aryle wie Styrol, a-Methylstyrol, o-Methylstyrol, m-Methylstyrol, p-Methylstyrol, Pentachlorstyrol, o-Chlorstyrol, m-Chlorstyrol, p-Chlorstyrol und p-Cyanstyrol; konjugierte Diene oder Chlordiene wie Butadien und Chloropren; carbonylfunktionelle ethylenisch ungesättigte Monomere wie Acrolein, Diacetonacrylamid, Vinylmethylketon, Vinylethylketon, Vinylbutylketon, Diacetonacrylat und Acetonitrilacrylat; hydroxyfunktionelle Alkyl(meth)acrylate (vorzugsweise 1 bis 18C) wie 2-Hydroxyethylacrylat, 2-Hydroxyethylmethacrylat, 2-Hydroxy-n-propylacrylat, 2-Hydroxy-n-propylmethacrylat, 3-Hydroxy-n-propylmethacrylat, 3-Hydroxy-n-propylacrylat, 4-Hydroxy-n[1]butylacrylat, 4-Hydroxy-n-butylmethacrylat, Hydroxystearylacrylat, Hydroxystearylmethacrylat; Dihydroxyalkyl-Addukte (vorzugsweise 1 bis 6 C) von Maleinsäure, Fumarsäure und Phthalsäure; mit Polyethylenoxid oder Polypropylenoxid funktionalisierte hydroxylfunktionelle (Meth)acrylate.

Insbesondere sind die folgenden Vinylpolymere geeignet Ethylen, Butylacrylat, Methylmethacrylat, Vinylacetat.

Als Polyesterpolymere eigenen sich alle dem Fachmann bekannten Polyester welche eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweisen. Geeignete Polyesterpolymere sind beispielsweise erhältlich durch Umsetzung von monomeren Dicarbonsäuren mit mehrwertigen Alkoholen. Als Aufbaukomponenten besonders geeignet sind aliphatische und aromatische Dicarbonsäuren wir Pthalsäure, Terephthalsäure, Isophthalsäure, Adipinsäure, Sebacinsäure, Bernsteinsäure sowie 1,4-Butandiol, 1,6-Hexandiol und Ethylenglycol.

Als Polyurethanpolymer eignen sich alle dem Fachmann bekannten Polyurethane welche eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweisen. Ein als Komponente (A) geeignetes Polyurethanpolymer ist/sind im Allgemeinen ein oder mehrere Polyurethane im engeren Sinn, d.h. solche Polymere, die durch Polymerisation von Polyolen und Polyisocyanaten erhalten werden, aber es können auch solche sein, bei denen als Aufbau-Komponenten auch Mono- und/oder Diamine eingesetzt werden, gegebenenfalls als Kettenverlängerer. Im Rahmen der vorliegenden Erfindung ist somit das Polyurethanpolymer der Komponente (A) im Allgemeinen mindestens ein Polyurethan, mindestens ein Polyharnstoff und/oder mindestens ein Polyurethanharnstoff.

Die als Komponente (A) geeigneten Polyurethanpolymere bzw. deren wässrigen Polyurethan- bzw. Polyurethan-Harnstoff-Dispersionen sind typischerweise Umsetzungsprodukte aus

a) mindestens einer gegenüber Isocyanat reaktiven Komponente, die mindestens eine ionische oder potentiell ionische hydrophile Gruppe trägt,

b) mindestens einer Diol- und/oder Polyolkomponente,

c) mindestens einer Di- und/oder Polyisocyanatkomponente,

d) ggf. mindestens einer mono-, di-, und/oder tri-amino-funktionellen Verbindung und

e) ggf. sonstiger isocyanatreaktiver Verbindungen

Komponente a) wird dabei typischerweise in Mengen von 0,5 Gew.-% bis 10 Gew.-%, bevorzugt 0,5 Gew.-% bis 4 Gew.-% bezogen auf den wasser- und lösemittelfreien Polyurethan bzw. Polyurethan-Polyharnstoff eingesetzt.

Komponente b) wird dabei typischerweise in Mengen von 50 Gew.-% bis 95 Gew.-%, bevorzugt 65 Gew.-% bis 92 Gew.-% bezogen auf den wasser- und lösemittelfreien Polyurethan bzw. Polyurethan-Polyharnstoff eingesetzt.

Komponente c) wird dabei typischerweise in Mengen von 4 Gew.-% bis 25 Gew.-%, bevorzugt 6 Gew.-% bis 15 Gew.-% bezogen auf den wasser- und lösemittelfreien Polyurethan bzw. Polyurethan-Polyharnstoff eingesetzt.

Komponente d) wird dabei typischerweise in Mengen von 0 Gew.-% bis 10 Gew.-%, bevorzugt 0 Gew.-% bis 5 Gew.-% bezogen auf den wasser- und lösemittelfreien Polyurethan bzw. Polyurethan-Polyharnstoff eingesetzt.

Komponente e) wird dabei typischerweise in Mengen von 0 Gew.-% bis 10 Gew.-%, bevorzugt 0 Gew.-% bis 5 Gew.-% bezogen auf den wasser- und lösemittelfreien Polyurethan bzw. Polyurethan-Polyharnstoff eingesetzt.

Die Mengenanteile der Komponenten a), b), c), d) und e) addieren sich zu 100 Gew.-%.

Es ist im Rahmen der Erfindung selbstverständlich, dass durch die vorstehend beschriebenen Komponenten a) bis e) und deren typischen und bevorzugten Mengenangaben auch sämtliche Kombinationen der im einzelnen genannten Mengenbereiche untereinander erfasst sind.

Geeignete Isocyanat reaktive Komponenten a), die mindestens eine ionische oder potentiell ionische Gruppe tragen, sind Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und deren Alkali- und Ammoniumsalze. Beispiele sind N-(2-Aminoethyl)-β-alanin, N-(2-Aminoethyl)-2-aminoethansulfonsäure, N-(2-Aminoethyl)-2-aminoethancarbonsäure Ethylendiaminpropyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und $NaHSO_3$, z.B. beschrieben in der DE-A 2 446 440 (Seite 5-9, Formel I-III). Für die Salzbildung gut geeignet sind Natrium-, Kalium-, und/oder Lithiumhydroxid sowie tertiäre Amine wie Triethylamin, Dimethylcyclohexylamin und Ethyldiisopropylamin. Es können auch andere Amine zur Salzbildung eingesetzt werden, wie z.B. Ammoniak, Diethanolamin, Triethanolamin, Dimethylethanolamin, Methyldiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Geeignete Isocyanat reaktive Komponenten a), die mindestens eine ionische oder potentiell ionische Gruppe tragen, auch sind Mono- und Dihydroxycarbonsäuren, und deren Alkalisalze. Beispiele sind Dimethylolpropionsäure, Dimethylolbuttersäure, Hydroxypivalinsäure, und dessen Alkalisalze. Für die Salzbildung gut geeignet sind Natrium-, Kalium- und/oderLithiumhydroxid.

Der Einsatz von Säuregruppen-aufweisenden Bestandteilen in a), die nicht oder mit schwächeren Basen als KOH neutralisiert sind, ist durch das Kriterium, dass die partielle Säurezahl < 1,25 mg KOH / g beträgt, erfindungsgemäß in der Einsatzmenge stark begrenzt.

Für mit Basen neutralisierte Säuregruppen, die die gleiche Stärke wie KOH aufweisen, gilt:
Komponente a) ist in dem als Komponente (A) geeigneten Polyurethanpolymer vorzugsweise zu 0,5 Gew.-% bis 10 Gew.-%, bevorzugt zu 0,5 Gew.-% bis 4 Gew.-% und besonders bevorzugt zu 0,5 Gew.-% bis 3,75 Gew.-% enthalten, bezogen auf das Gesamtgewicht des Polyurethanpolymers.

Die als Komponente (A) geeigneten Polyurethanpolymere werden hergestellt aus einem Polyol und einem Polyisocyanat. Beispiel solcher Polyole beinhalten Polyester-Polyole, Polyether-Polyole, und Kombinationen daraus. Geeignete Polyester-Polyole beinhalten kristallisierende und amorphe Polyester Polyole.

Geeignete Diol- und/oder Polyolkomponenten b) sind Verbindungen mit mindestens zwei gegenüber Isocyanaten reaktionsfähigen Wasserstoffatomen und einem mittleren Molekulargewicht von 62 bis 18000, bevorzugt 62 bis 4000 g/Mol. Beispiele für geeignete Aufbaukomponenten sind Polyether, Polyester, Polycarbonate, Polylactone und Polyamide. Bevorzugte Polyole b) weisen 2 bis 4, besonders bevorzugt 2 bis 3 Hydroxylgruppen auf. Auch Gemische verschiedener derartiger Verbindungen kommen in Frage.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- oder Polycarbonsäuren, wie z.B. Bernstein-, Methylbernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal-, Cyclohexandicarbon-, Malein-, Fumar-, Malon- oder Trimellitsäure sowie Säureanhydride, wie o-Phthal-, Trimellit- oder Bernsteinsäureanhydrid oder deren Gemische mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole,

wie Trimethylolpropan, Glycerin oder Pentaerythrit, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Selbstverständlich kann es sich bei den Polyesterpolyolen auch um Homo- oder Mischpolymerisate von Lactonen handeln, die bevorzugt durch Anlagerung von Lactonen oder Lactongemischen, wie Butyrolacton, ε-Caprolacton und/oder Methyl-ε-caprolacton an die geeignete di- und/oder höherfunktionelle Startermoleküle, wie z.B. die vorstehend als Aufbaukomponenten für Polyesterpolyole genannten niedermolekularen, mehrwertigen Alkohole erhalten werden. Die entsprechenden Polymerisate des ε-Caprolactons sind bevorzugt.

Besonders bevorzugt sind weitgehend lineare Polyesterpolyole, die als Aufbaukomponenten Adipinsäure und Butandiol-1,4 und/oder Hexandiol-1,6 und/oder 2,2-Dimethyl-1,3-propandiol enthalten.

Ebenfalls bevorzugt sind Polyesterpolyole, die als Aufbaukomponente Isophthalsäure und/oder Terephthalsäure, sowie Neopentylglykol, Ethylenglykol, Butandiol und/oder Hexandiol enthalten.

Auch Hydroxylgruppen aufweisende Polycarbonate kommen als Polyhydroxylkomponenten in Betracht, z.B. solche, die durch Umsetzung von Diolen wie 1,4-Butandiol und/oder 1,6-Hexandiol mit Diarylcarbonaten, wie z.B. Diphenylcarbonat, Dialkylcarbonaten, wie z. B. Dimethylcarbonat oder Phosgen hergestellt werden können. Durch die zumindest teilweise Verwendung von Hydroxylgruppen aufweisenden Polycarbonaten kann die Hydrolysebeständigkeit der Polyurethan- bzw. Polyurethan-Harnstoff-Dispersionsklebstoffe verbessert werden.

Bevorzugt sind Polycarbonate, die durch Umsetzung von 1,6-Hexandiol mit Dimethylcarbonat hergestellt wurden.

Als Polyetherpolyole geeignet sind z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole. Als Aufbaukomponenten A) geeignete Polyetherpolyole sind die Homo-, Misch- und Pfropfpolymerisate des Propylenoxids und des Ethylenoxids, welche durch Anlagerung der genannten Epoxide an niedermolekulare Di- oder Triole, wie sie oben als Aufbaukomponenten für Polyesterpolyole genannte werden oder an höherfunktionelle niedermolekulare Polyole wie z.B. Pentaerythrit oder Zucker oder an Wasser zugänglich sind.

Besonders bevorzugte di- oder höherfunktionelle Polyole b) sind Polyesterpolyole, Polylactone und Polycarbonate.

Ebenfalls geeignete Komponenten b) sind niedermolekulare Diole, Triole und/oder tetraole wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Neopentylglykol, 1,4-Cyclohexandiol, 1,4-Cyclohexandimethanol, 1,4-, 1,3-, 1,2-Dihydroxybenzol oder 2,2-Bis-(4-hydroxyphenyl)-propan (Bisphenol A), TCD-Diol, Trimethylolpropan, Glycerin, Pentaerythrit, Dipenthaerytrit oder deren Gemische, gegebenenfalls unter Mitverwendung weiterer nicht genannter Diole bzw. Triole.

Als Polyole können auch Umsetzungsprodukte der genannten Polyole, insbesondere der niedermolekularen Polyole, mit Ethylen- und/oder Propylenoxid eingesetzt werden.

Die niedermolekularen Komponenten b) haben ein Molekulargewicht von 62 bis 400 g/ Mol und werden bevorzugt in Kombination mit den oben beschriebenen Polyesterpolyolen, Polylactonen, Polyethern und/oder Polycarbonaten eingesetzt.

Polyolkomponente b) ist in dem in dem als Komponente (A) geeigneten Polyurethanpolymer vorzugsweise zu 50 Gew.-% bis 95 Gew.-%, bevorzugt zu 65 Gew.-% bis 92 Gew.-% und besonders bevorzugt zu 75 Gew.-% bis 90 Gew.-% enthalten, bezogen auf das Gesamtgewicht des Polyurethanpolymers.

Als Komponenten c) sind beliebige organische Verbindungen geeignet, die mindestens zwei freie Isocyanatgruppen pro Molekül aufweisen. Bevorzugt werden Diisocyanate $Y(NCO)_2$ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht. Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanatodiphenylmethan, 2,2'- und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische.

Es ist selbstverständlich auch möglich, die in der Polyurethanchemie an sich bekannten höherfunktionellen

Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrionstruktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Bevorzugte Diisocyanate c) sind aliphatische und araliphatische Diisocyanate wie Hexamethylendiisocyanat, 1,4-Diisocyanatocyclohexan, 1-Isocyanato-3,3,5-trimethyl-5-isocyanatomethyl-cyclohexan, 4,4'-Diisocyanato-dieyclohexyl-methan, 4,4'-Diisocyanatodicydohexylpropan-(2,2), sowie aus diesen Verbindungen bestehende Gemische, die ggf. anteilig 2,4-Düsocyanatotoluol und/oder 2,6-Diisocyanatotoluol enthalten können.

Ganz besonders bevorzugte Komponenten c) sind Gemische aus Hexamethylendiisocyanat und 1-Isocyanato-3,3,5-trimethyl-5-isocyanatomethyl-cyclohexan, sowie Mischungen aus 1-Isocyanato-3,3,5-trimethyl-5-isocyanatomethyl-cyclohexan und/oder 4,4'-Diisocyanato-dicyclohexyl-methan und/oder 2,4-Diisocyanatotoluol und/oder 2,6-Diisocyanatotoluol.

Komponente c) ist in dem als Komponente (A) geeigneten Polyurethanpolymer vorzugsweise in Mengen von 4 Gew.-% bis 25 Gew.-%, bevorzugt von 6 Gew.-% bis 15 Gew.-% und besonders bevorzugt in Mengen von 8 Gew.-% bis 15 Gew.-% enthalten, bezogen auf das Gesamtgewicht des Polyurethanpolymers.

Geeignete Komponenten d) sind mono-, di-, trifunktionelle Amine und/oder mono-, di-, trifunktionelle Hydroxyamine, wie z.B. aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine, wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin, Diisopropanolamin, 1,3-Diamino-2-propanol, N-(2-Hydroxyethyl)-ethylendiamin, N,N-Bis(2-Hydroxyethyl)-ethylendiamin und 2-Propanolamin. Weitere Beispiele sind Diamine und Triamine wie z.B. 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-aminocyclohexyl)-methan und Diethylentriamin. Weiterhin kommen Adipinsaeuredihydrazid, Hydrazin bzw. Hydrazinhydrat in Frage. Selbstverständlich können auch Mischungen mehrerer der genannten, ggf. auch zusammen mit nicht genannten Verbindungen d) eingesetzt werden.

Bevorzugte Komponenten d) sind 1,2-Ethandiamin, 1-Amino-3,3,5-trimethyl-5-aminomethyl-cyclohexan, Diethylentriamin, Diethanolamin, Ethanolamin, N-(2-Hydroxyethyl)-ethylendiamin und N,N-Bis(2-Hydroxyethyl)-ethylendiamin.

Komponenten d) dienen als Kettenverlängerungsmittel bevorzugt dazu, höhere Molekulargewichte aufzubauen oder als monofunktionelle Verbindungen Molekulargewichte zu begrenzen und/oder ggf. zusätzlich weitere reaktive Gruppen, wie z.B. freie Hydroxylgruppen als weitere Vernetzungsstellen einzubauen.

Komponente d) ist in dem als Komponente (A) geeigneten Polyurethanpolymer vorzugsweise in Mengen von 0 Gew.-% bis 10 Gew.-%, bevorzugt von 0 Gew.-% bis 5 Gew.-% und besonders bevorzugt in Mengen von 0,25 Gew.-% bis 4 Gew.-% enthalten, bezogen auf das Gesamtgewicht des Polyurethanpolymers.

Als Aufbaukomponente e) geeignete difunktionelle Polyolkomponenten mit einem Molekulargewicht von 62 bis 399 g/Mol sind beispielsweise die zur Herstellung der Polyesterpolyole b) genannten Polyole. Auch niedermolekulare Polyesterdiole, Polyetherdiole, Polycarbonatdiole oder andere Polymerdiole sind prinzipiell geeignet, sofern sie ein Molekulargewicht von 62 bis 399 g/Mol aufweisen.

Komponente e) ist in dem als Komponente (A) geeigneten Polyurethanpolymer vorzugsweise in Mengen von 0 Gew.-% bis 10 Gew.-%, bevorzugt von 0 Gew.-% bis 5 Gew.-% enthalten, bezogen auf das Gesamtgewicht des Polyurethanpolymers.

Die Mitverwendung von Komponente e) kann z.B. zu Polyurethanpolymeren führen, die zusätzlich zu den enthaltenen reaktiven Gruppen weitere reaktive Gruppen enthalten, was z.B. die Anwendung verschiedener Vernetzungsmechanismen (Dual Cure) ermöglicht, um spezielle Eigenschaften, wie z.B. ein zweistufige, ggf. zeitlich versetzte Aushärtung oder besonders hohe Vernetzungsdichte zu erzielen.

Die als Komponente (A) geeigneten Polyurethanpolymere können als Feststoff, oder als Dispersion in einem flüssigen Medium vorliegen und eingesetzt werden. Vorzugsweise werden die Polyurethanpolymere als wässrige Dispersionen bereitgestellt. Solche als Komponente (A) geeigneten Polyurethan-Dispersionen weisen vorzugsweise Nichtflüchtiger Anteile von 15 Gew.-% bis 70 Gew.-%, bevorzugt von 20 Gew.-% bis 60 Gew.-% bezogen auf das Gesamtgewicht der wässrigen Polyurethan-Dispersion auf. Der pH-Wert bei 23 °C liegt vorzugsweise im Bereich von 4 bis 11, bevorzugt 5 bis 8. Die mittleren Teilchengrößen gemessen durch Laserbeugung gemäß ISO 13320 (Laserbeugung) mit dem Malvern Mastersizer 3000 liegen üblicherweise im Bereich von 20 nm bis 750 nm, bevorzugt im Bereich von 30 nm

bis 450 nm.

Als Komponente (A) geeignete Polyurethan- bzw. Polyurethan-Harnstoff-Dispersionen können beispielsweise hergestellt werden, indem Komponenten a), b), c) und ggf. e) in einer ein- oder mehrstufigen Reaktion zu einen isocyanatfunktionellen Prepolymeren umgesetzt werden, welches anschließend mit Komponente d) in einer ein- oder zweistufigen Reaktion umgesetzt wird und dann in oder mit Wasser dispergiert wird, wobei ggf. mit verwendetes Lösemittel während oder nach der Dispergierung destillativ anteilig oder ganz entfernt werden kann.

Als Komponente (A) geeignete Polyurethan-Dispersionen sind vorzugsweise anionisch stabilisierte Polyurethan-Dispersionen. Ein Beispiel für eine kommerzielle, im Handel erhältliche Polyurethan-Dispersionen die als Komponente (A) geeignet ist, ist Dispercoll® U 8755, erhältlich bei der Covestro Deutschland AG.

In einer bevorzugten Ausführungsform weist das mindestens eine Polymer (A) keine Carboxylgruppen und / oder Carboxylatgruppen auf. auf.

In einer bevorzugten Ausführungsform ist das mindestens eine Polymer (A) ausgewählt aus der Gruppe bestehend aus Polyurethanpolymeren, Polyacrylatpolymeren, Polymethacrylatpolymeren, Polyvinylacetatpolymeren, Polyesterpolymeren und / oder Mischungen aus mindestens zwei davon. Vorzugsweise ist das mindestens eine Polymer (A) ausgewählt der Gruppe bestehend aus Polyurethanpolymeren, Polyacrylatpolymeren, Polymethacrylatpolymeren und / oder Mischungen aus mindestens zwei davon. Besonders bevorzugt ist das mindestens eine Polymer (A) mindestens ein Polyurethanpolymer.

In einer bevorzugten Ausführungsform weist das mindestens eine Polymer (A) eine partiellen Säurezahl im Bereich von 0 mg KOH / g bis 1 mg KOH /g, vorzugsweise im Bereich von 0 mg KOH / g bis 0,05 mg KOH /g, jeweils bestimmt gemäß DIN EN ISO 2114:2000 (2002-06, Verfahren A mit einem Aceton-Ethanol-Lösungsmittelgemisch), auf.

In einer bevorzugten Ausführungsform ist das durchschnittliche Molekulargewicht (Mw) von Polymer (A) ≥ als das durchschnittliche Molekulargewicht (Mw) von Polyurethanpolymer (B), vorzugsweise ist das durchschnittliche Molekulargewicht (Mw) von Polymer (A) größer als das durchschnittliche Molekulargewicht (Mw) von Polyurethanpolymer (B), jeweils bestimmt gemäß DIN EN ISO 13885-2 (2021-11) mit N,N-Dimethlyacetamid als Eluent und Polystyrol als Standard.

In einer bevorzugten Ausführungsform weist das mindestens eine Polymer (A) ein durchschnittliches Molekulargewicht (Mw) im Bereich von 70.000 g/mol bis 350.000 g/mol, vorzugsweise im Bereich von 100.000 g/mol bis 350.000 g/mol, besonders bevorzugt im Bereich von 200.000 g/mol bis 350.000 g/mol, noch bevorzugter im Bereich von 300.000 g/mol bis 350.000 g/mol auf, jeweils bestimmt gemäß DIN EN ISO 13885-2 (2021-11) mit N,N-Dimethlyacetamid als Eluent und Polystyrol als Standard.

In einer bevorzugten Ausführungsform weist das mindestens eine Polymer (A) eine Glasübergangstemperatur von im Bereich von -100 °C bis 80 °C auf bestimmt gemäß DSC (differential scanning calometry) DIN EN ISO 11357-1 (2017-02). In einer weiteren bevorzugten Ausführungsform ist das mindestens eine Polymer (A) mindestens ein teilkristallines Polyurethanpolymer mit einer Schmelztemperatur im Bereich von 35 bis 80 °C und einer Schmelzenthalpie von ≥ 15 J/g, jeweils bestimmt mittels DSC bei einer Aufheizrate von 20 K/min gemäß DIN EN ISO 11357-1:2017-02.

In einer bevorzugten Ausführungsform beträgt der Anteil von Komponente (A) in der wässrigen Klebstoffformulierung, bezogen auf gesamten Mengenanteile der Komponenten (A), (B), (C) und (D) als 100 Gew.-%, 5 Gew.-% bis 85 Gew.-%, vorzugsweise 27 Gew.-% bis 80 Gew.-%, der Komponente (A).

## Komponente (B)

Die erfindungsgemäße wässrige Klebstoffformulierung und das erfindungsgemäße Kit-of-parts enthalten als Komponente (B) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 1,25 mg KOH / g bis 25 mg KOH /g, bestimmt gemäß DIN EN ISO 2114:2000 (2002-06, Verfahren A mit einem Aceton-Ethanol-Lösungsmittelgemisch) aufweist.

In einer bevorzugten Ausführungsform weist das als Komponente (B) geeignete Polyurethan eine Schmelzenthalpie von ≥ 35 J/g, bevorzugt von ≥ 40 J/g, besonders bevorzugt von ≥ 45 J/g auf, jeweils bestimmt mittels DSC (differential scanning calometry) bei einer Aufheizrate von 20 K/min gemäß DIN EN ISO 11357-1:2017 (2017-02).

Im Falle, das mehrere Polymere als Komponente (B) vorliegen, weist die Mischung dieser Polymere eine durchschnittliche partielle Säurezahl im Bereich von 1,25 mg KOH / g bis 25 mg KOH /g auf, bestimmt gemäß DIN EN ISO 2114:2000 (2002-06, Verfahren A mit einem Aceton-Ethanol-Lösungsmittelgemisch), auf, wobei vorzugsweise jedes der Polymere in der Mischung eine partielle Säurezahl im Bereich von 1,25 mg KOH / g bis 25 mg KOH /g, bestimmt gemäß DIN EN ISO 2114:2000 (2002-06, Verfahren A mit einem Aceton-Ethanol-Lösungsmittelgemisch), aufweist.

Im Falle, das mehrere Polymere als Komponente (B) vorliegen, weist die Mischung dieser Polymere eine durchschnittliche Schmelztemperatur im Bereich von 35 bis 80 °C und eine Schmelzenthalpie von ≥ 15 J/g, jeweils bestimmt mittels DSC (differential scanning calometry) bei einer Aufheizrate von 20 K/min gemäß DIN EN ISO

11357-1:2017 (2017-02), auf, wobei vorzugsweise jedes der Polymere in der Mischung eine Schmelztemperatur im Bereich von 35 bis 80 °C und eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), aufweist.

In einer bevorzugten Ausführungsform ist das als Komponente (B) geeignete Polyurethan strukturell unterschiedlich zu dem Polymer (A), insbesondere dem als Komponente (A) geeigneten Polyurethan. Das als Komponente (B) geeignete Polyurethan ist vorzugsweise filmbildend, vorzugsweise filmbildend mit einer Mindestfilmbindungstemperatur nach DIN 53 787 im Bereich von 0 bis 100 °C, besonders bevorzugt zwischen 0 und 35 °C und kann beispielsweise ein einzelnes Carboxylgruppen enthaltendes Polyurethan, oder eine Mischung aus mindestens zwei verschiedenen Carboxylgruppen enthaltenden Polyurethanen sein.

Bevorzugt erfolgt die Vernetzungsreaktion mit Carbodiimid-Gruppen überwiegend bzw. ausschließlich über die eingebauten Carboxylgruppen in dem als Komponente (B) geeignete Polyurethan.

Als Komponente (B) eignen sich alle dem Fachmann bekannten teilkristallinen oder kristallinen Carboxylgruppen enthaltenden Polyurethanpolymere, welche eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 1,25 mg KOH / g bis 25 mg KOH /g, bestimmt gemäß DIN EN ISO 2114:2000 (2002-06, Verfahren A mit einem Aceton-Ethanol-Lösungsmittelgemisch), aufweisen. Ein als Komponente (B) geeignetes Polyurethanpolymer ist/sind im Allgemeinen ein oder mehrere Polyurethane im engeren Sinn, d.h. solche Polymere, die durch Polymerisation von Polyolen und Polyisocyanaten erhalten werden, aber es können auch solche sein, bei denen als Aufbau-Komponenten auch Mono- und/oder Diamine eingesetzt werden, gegebenenfalls als Kettenverlängerer. Im Rahmen der vorliegenden Erfindung ist somit das Polyurethanpolymer der Komponente (B) im Allgemeinen mindestens ein Polyurethan, mindestens ein Polyharnstoff und/oder mindestens ein Polyurethanharnstoff.

Grundsätzlich geeignete Komponenten zum Aufbau des als Komponente (B) geeigneten Polyurethanpolymers sind beispielsweise die oben beschriebenen Komponenten a) bis e) des als Komponente (A) geeigneten Polyurethanpolymers.

Zusätzlich zu den oben aufgeführten Komponenten a) bis e) enthält das als Komponente (B) geeignete Polyurethanpolymer weitere Komponenten, die in das Polyurethanpolymer (B) eingebaut werden bzw. eingebaut sind. Insbesondere sind Verbindungen mit Carboxylgruppen und kristalline oder teilkristalline difunktionelle Polyesterpolyole in das Polyurethanpolmer (B) eingebaut.

Carboxylgruppen enthaltende Verbindungen, die als Aufbaukomponente für das als Komponente (B) erfindungsgemäß eingesetzte Polyurethanpolymer (B) geeignet sind, sind z.B. Diaminoverbindungen bzw. Dihydroxyverbindungen, die zusätzlich Carboxylgruppen tragen. Beispiele für derartige Verbindungen sind Dimethylolpropionsäure, Dimethylolbuttersäure und / oder Umsetzungsprodukte im Sinne einer Michaeladdition von 1 Mol Diamin wie z.B. 1,2-Ethandiamin oder Isophorondiamin mit 2 mol Acrylsäure oder Maleinsäure. Diese können wie bei der Beschreibung der Komponente (A) beschrieben als Komponente a) zusätzlich eingesetzt werden. Besonders bevorzugt als Carboxylgruppen enthaltender Baustein geeignete wie die beschriebenen Bausteine a) in Komponente (B) ist Dimethylolpropionsäure.

Weitere Carboxylgruppen enthaltende Verbindungen, die als Komponente e) für das erfindungsgemäß eingesetzte Polyurethanpolymer (B) geeignet sind, sind beispielsweise Aminocarbonsäuren, die mindestens eine isocyanatreaktive Aminogruppe enthalten, und somit bei der Herstellung der als Komponente (B) geeignete Polyurethanpolymere durch Umsetzung mit der Komponente e) in das Polymer eingebaut werden. Geeignet sind lineare aliphatische, verzweigte aliphatische, aliphatisch-aromatische und aromatische Aminocarbonsäuren. Beispielhaft genannt als geeignete Verbindungen seien Aminocarbonsäuren mit einer primären oder sekundären Aminogruppe, wie Alanin, Lysin, Glutamin, 6-Aminohexansäure, Aminoundecansäure, 8-Aminooctansäure, 5-Aminopentansäure, 4-Aminobuttersäure, Aminobenzoesäure, 4-Aminomethylcyclohexancarbonsäure, 2-Aminohexansäure, 4-Aminocyclohexan-carbonsäure, 12-Aminododecansäure, 9-Aminoononacarbonsäure.

Bevorzugt werden als Carboxylgruppenhaltige-Bausteine Aminocarbonsäuren geeignete Bausteine e) in Komponente (B) und besonders bevorzugt Aminoalkylcarbonsäuren wie 6-Aminohexansäure und/oder Lysin eingesetzt, die in über die Aminogruppe eingebauter Form im Polymer enthalten sind.

Die Carboxylgruppen aufweisenden Bausteine können anteilig auch direkt in Ihrer Salzform, als Carboxylat eingesetzt werden oder es können zur Salzbildung führende Neutralisationsmittel erst während oder nach der Herstellung der Polyurethane zugegeben werden

Für die Salzbildung besonders gut geeignete und bevorzugte tertiäre Amine sind z.B. Triethylamin, Dimethylcyclohexylamin, Ethyldiisopropylamin. Besonders bevorzugt wird Triethylamin eingesetzt.

Es können auch andere Amine zur Salzbildung eingesetzt werden, wie z.B. Ammoniak, Diethanolamin, Triethanolamin, Dimethylethanolamin, Methyldiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Es ist auch möglich, anteilig andere Neutralisationsmittel wie z.B. Natrium-, Kalium-, und/oder Lithiumhydroxid für Neutralisationszwecke einzusetzen. Die Art und Menge an gegebenenfalls verwendeten Neutralisationsmitteln ist so zu wählen, dass in dem als Komponente (B) verwendeten Polymer noch Carboxylgruppen vorliegen, wenn diese mit Polycarbodiimiden zur Reaktion gebracht werden.

Als Aufbaukomponente b) in Komponente (B) geeignete kristalline oder teilkristalline difunktionelle Polyesterpolyole kommen insbesondere lineare oder auch schwach verzweigte Polyesterpolyole in Betracht, die auf Dicarbonsäuren und/oder deren Derivaten, wie Anhydride, Ester oder Säurechloride und bevorzugt aliphatischen, linearen Polyolen basieren. Auch Mischungen von Dicarbonsäuren und/oder deren Derivate sind geeignet. Geeignete Dicarbonsäuren sind beispielsweise Adipinsäure, Bernsteinsäure, Sebacinsäure oder Dodecandisäure. Bevorzugt sind Bernsteinsäure, Adipinsäure und Sebacinsäure und deren Mischungen, besonders bevorzugt sind Bernsteinsäure und Adipinsäure und deren Mischungen, ganz besonders bevorzugt ist Adipinsäure. Diese werden in Mengen von mindestens 90 mol-%, bevorzugt von 95 bis 100 mol-%, bezogen auf die Gesamtmenge aller Carbonsäuren, eingesetzt.

Die difunktionellen Polyesterpolyole b) können beispielsweise durch Polykondensation von Dicarbonsäuren mit Polyolen hergestellt werden. Die Polyole haben bevorzugt ein Molgewicht von 62 bis 399 g/mol, bestehen aus 2 bis 12 C-Atomen, sind vorzugsweise unverzweigt, difunktionell und weisen bevorzugt primäre OH-Gruppen auf.

Beispiele für Polyole, die für die Herstellung der Polyesterpolyole b) verwendet werden können, sind mehrwertige Alkohole, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische.

Bevorzugte Polyolkomponenten für die Polyesterpolyole b) sind Ethandiol-1,2, Butandiol-1,4 und Hexandiol-1,6, besonders bevorzugt sind Butandiol-1,4 und Hexandiol-1,6, ganz besonders bevorzugt ist Butandiol-1,4.

Die Polyesterpolyole b) können aus einem oder mehreren Polyolen aufgebaut sein. In einer bevorzugten Ausführungsform der vorliegenden Erfindung sind sie nur aus einem Polyol aufgebaut.

Wenn die kristallinen oder teilkristallinen difunktionellen Polyesterpolyole mit einem zahlenmittleren Molekulargewicht von wenigstens 400 g/mol und einer Schmelztemperatur von wenigstens 35 °C eine Schmelzenthalpie von wenigstens 50 J/g aufweisen, so hat das unter Verwendung desselben hergestellte Polymer regelmäßig eine Schmelzenthalpie von $\geq$ 15 J/g. Falls gewünscht kann eine Adjustierung der Schmelzenthalpie des Polymers durch eine leichte Veränderung des Gehaltes an Polyesterpolyol b) in der Zusammensetzung oder durch eine geringe Variation der Schmelzenthalpie des Polyesterpolyols erreicht werden. Diese Maßnahmen erfordern lediglich orientierende Versuche und liegen völlig innerhalb der praktischen Erfahrung des Durchschnittsfachmanns auf diesem Gebiet.

Die Herstellung von Polyesterpolyolen b) ist aus dem Stand der Technik bekannt.

Das zahlenmittlere Molekulargewicht der Polyesterpolyole b) liegt vorzugsweise bei 400 bis 4000 g/mol, weiter bevorzugt 1000 bis 3000 g/mol, besonders bevorzugt 1500 bis 2500 g/mol, ganz besonders bevorzugt 1800 bis 2400 g/mol.

Die Schmelztemperatur der kristallinen bzw. teilkristallinen Polyesterpolyole liegt in der Regel mindestens bei 35 °C, bevorzugt 40 bis 80 °C, besonders bevorzugt 42 bis 60 °C. Die Schmelzenthalpie beträgt $\geq$ 15 J/g, bevorzugt $\geq$ 40 J/g und besonders bevorzugt $\geq$ 50 J/g

Weitere Angaben zur Herstellung eines Carboxylgruppen enthaltenden Polyurethans können der Patentschrift EP3502157A1 und EP2186841A1 und EP3795601A1 entnommen werden.

Die als Komponente (B) geeigneten Polyurethanpolymere können als Feststoff Lösung oder als Dispersion in einem flüssigen Medium vorliegen und eingesetzt werden. Vorzugsweise werden die Polyurethanpolymere als wässrige Dispersionen bereitgestellt. Solche als Komponente (A) geeigneten Polyurethan-Dispersionen weisen vorzugsweise nichtflüchtiger Anteile von 15 Gew.-% bis 70 Gew.-%, bevorzugt von 20 Gew.-% bis 60 Gew.-% auf, bezogen auf das Gesamtgewicht der Polyurethan-Dispersionen. Der pH-Wert liegt vorzugsweise im Bereich von 4 bis 11, bevorzugt 5 bis 8. Die mittleren Teilchengrößen ermittelt durch Laserbeugung liegen üblicherweise im Bereich von 20 nm bis 750 nm, bevorzugt im Bereich von 30 nm bis 450 nm.

Als Komponente (B) geeignete Polyurethan-Dispersionen sind vorzugsweise anionisch stabilisierte Polyurethan-Dispersionen. Ein Beispiel für eine kommerzielle, im Handel erhältliche Polyurethan-Dispersionen die als Komponente (B) geeignet ist, Dispercoll® U 2824 von der Covestro Deutschland AG.

Das als Komponente (A) geeignete mindestens eine Polymer und das als Komponente (B) geeignete mindestens eine Polyurethanpolymer liegen vorzugsweise in einem solchen Mischungsverhältnis vor, dass der getrocknete Klebstoffilm die folgenden Anteilen aufweist: mind. 30 Gew.-%, bevorzugt mind. 40 Gew.-%, besonders bevorzugt mind. 40 Gew.-% bis 89 Gew.-% des als Komponente (A) geeigneten mindestens einen Polymers, bezogen auf das Gesamtgewicht von Komponente (A) und (B) als 100 Gew.-%.

In einer bevorzugten Ausführungsform ist das durchschnittliche Molekulargewicht (Mw) von Polymer (A) $\geq$ als das durchschnittliche Molekulargewicht (Mw) von Polyurethanpolymer (B), vorzugsweise ist das durchschnittliche Molekulargewicht (Mw) von Polymer (A) größer als das durchschnittliche Molekulargewicht (Mw) von Polyurethanpolymer (B), jeweils bestimmt gemäß DIN EN ISO 13885-2 (2021-11) mit N,N-Dimethlyacetamid als Eluent und Polystyrol als Standard.

In einer bevorzugten Ausführungsform weist das mindestens eine Polyurethanpolymer (B) ein durchschnittliches Molekulargewicht (Mw) im Bereich von 20.000 g/mol bis 300.000 g/mol, vorzugsweise im Bereich von 20.000 g/mol bis 200.000 g/mol, besonders bevorzugt im Bereich von 20.000 g/mol bis 100.000 g/mol, noch bevorzugter im Bereich von 40.000 g/mol bis 80.000 g/mol auf, jeweils bestimmt gemäß DIN EN ISO 13885-2 (2021-11) mit N,N-Dimethlyacetamid als Eluent und Polystyrol als Standard.

In einer bevorzugten Ausführungsform weist das Polyurethanpolymer (B) eine partielle Säurezahl im Bereich von 2,5 mg KOH / g bis 25 mg KOH /g, vorzugsweise im Bereich von 2,5 mg KOH / g bis 12,5 mg KOH /g, jeweils bestimmt gemäß DIN EN ISO 2114:2000 (2002-06, Verfahren A mit einem Aceton-Ethanol-Lösungsmittelgemisch), auf.

In einer bevorzugten Ausführungsform beträgt der Anteil von Komponente (B) in der wässrigen Klebstoffformulierung, bezogen auf gesamten Mengenanteile der Komponenten (A), (B), (C) und (D) als 100 Gew.-%, 10 Gew.-% bis 70 Gew.-%, vorzugsweise 17 Gew.-% bis 70 Gew.-%, der Komponente (B).

**Komponente (C)**

Die erfindungsgemäße wässrige Klebstoffformulierung und das erfindungsgemäße Kit-of-parts enthalten als Komponente (C) mindestens ein Polycarbodiimid, und/oder mindestens ein Polyaziridin und/oder eine Mischung davon.

In einer bevorzugten Ausführungsform enthalten die erfindungsgemäße wässrige Klebstoffformulierung und das erfindungsgemäße Kit-of-parts als Komponente (C) mindestens ein Polycarbodiimid.

Der Begriff "Carbodiimidgruppe" oder "Carbodiimidstruktureinheit" entspricht der chemischen Struktur -N=C=N-.

Als Polycarbodiimid werden erfindungsgemäß solche Verbindungen verstanden, die mehr als eine Carbodiimidstruktureinheit enthalten.

Geeignete Polycarbodiimide weisen vorzugsweise die Struktur der Formel I als Bestandteil der Molekülstruktur auf:

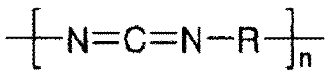

Formel (I)

worin n eine ganze Zahl von 2 oder mehr ist, vorzugsweise 2 bis 50, am meisten bevorzugt 3 bis 6; und R vorzugsweise eine oder mehrere der folgenden Gruppen ist: eine aliphatische organische Gruppe, eine alicyclische organische Gruppe und eine aromatische organische Gruppe, die C- und H-Atome enthält.

Geeignete Polycarbodiimide können durch allgemein bekannte Verfahren hergestellt werden, beispielsweise durch Decarboxylierungskondensation von Diisocyanaten, wie z.B. von aromatischen Diisocyanaten, aliphatischen Diisocyanaten und alicyclische Diisocyanaten. Bevorzugt eingesetzt wird eines oder mehrere der folgenden Diisocyanate: 1,5-Naphthalindiisocyanat, 4,4'-Diphenylmethandiisocyanat, 4,4'-Diphenyldimethylmethandiisocyanat, 1,3-Phenylendiisocyanat, 1,4-Phenylendiisocyanat, 2,4-Toluylendiisocyanat, 2,6-Toluylendiisocyanat, Hexamethylendiisocyanat, Cyclohexan-1, 4-Diisocyanat, Xylylendiisocyanat, Isophorondiisocyanat, Dicyclohexylmethan-4,4'-diisocyanat, Methylcyclohexandiisocyanat, Tetramethylxylylendiisocyanat, 3,3',5,5'-Tetraisopropyldiphenyl-4,4'-diisocyanat und 1,3,5-Triiso¬propylbenzol-2,4-diisocyanat ggf. Auch unter der Mitverwendung von monofunktionellen Isocyanaten wie z.B. Stearylisocyanat, Phenylisocyanat, Butylisocyanat, Hexylisocyanat oder/und höherfunktionellen Isocyanaten wie Trimere, Uretdione, Allophanate, Biurete der beispielhaft genannten Diisocyanate und anschließender, gleichzeitiger oder auch vorhergehender Umsetzung mit hydrophilierenden Komponenten, z.B. mono- oder difunktionelle Polyethern auf Basis von auf Alkoholen oder Aminen gestartete Ethylenoxid-Polymeren oder Ethylenoxid/Propylenoxid-Copolymeren erhalten werden.

Polycarbodiimide aufweisend Carbodiimidgruppen die aus aliphatischen, araliphatischen und/oder cycloaliphatischen Isocyanatgruppen hergestellt wurden sind bevorzugt, Polycarbodiimide aufweisend Carbodiimidgruppen die aus aliphatischen und/oder cycloaliphatischen Isocyanatgruppen hergestellt wurden sind besonders bevorzugt.

Besonders bevorzugte Polycarbodiimide werden durch Decarboxylierungskondensation von 1-Isocyanato-3,3,5-trimethyl-5-isocyanatomethyl-cyclohexan und/oder 4,4'-Diisocyanato-dicyclohexyl-methan erhalten.

Beispielsweise wird ein geeignetes Polycarbodiimid ausgehend von einem oder mehreren oben beschriebenen Diisocyanate unter Verwendung einer organischen Phosphorverbindung oder einer metallorganischen Verbindung als Katalysator in Abwesenheit eines Lösungsmittels oder in einem inerten Lösungsmittel bei einer Temperatur von etwa 70 °C durch eine Decarboxylierungskondensation hergestellt.

Bevorzugt erfolgt die Herstellung durch Erhitzen mindestens eines Diisocyanates in Gegenwart eines geeigneten Katalysators, wie z.B. Phospholinoxid, auf 100 bis 250°C solange unter Kohlendioxidabspaltung, bis der gewünschte Umsetzungsgrad erreicht ist. Der Verlauf der Reaktion kann beispielsweise durch die Abnahme der Konzentration von Isocyanatgruppen im Reaktionsgemisch verfolgt werden. Das so erhaltene Isocyanatgruppen enthaltende Reaktionsgemisch wird anschließend mit mindestens einem hydroxyfunktionellen Polyether auf Basis von Ethylenoxid bzw. auf Basis von Etyhlen- und Propylenoxid umgesetzt, wobei gegebenenfalls gleichzeitig bzw. anschließend eine Umsetzung mit weiteren hydroxy- und/oder aminofunktionellen und/oder anderen isocyanatreaktiven Verbindungen wie beispielsweise Butylglycol erfolgt und gegebenenfalls anschließend dispergiert, emulgiert oder gelöst wird.

Der Stand der Technik, der die Herstellung und Stabilisierung von Polycarbodiimiden beschreibt, kann den europäischen Patentanmeldungen EP 3 502 157 A1 und EP 2 552 982 A2 entnommen werden.

Geeignete Polycarbodiimide sind z.B. Carbodilite® SV-02, Carbodilite® V-02-L2 und Carbodilite® E-02 (alle von Nisshinbo Industries, Tokio, Japan) sowie Desmodur® 2802, von der Covestro Deutschland AG. Bevorzugte Polycarbodiimide sind Desmodur® 2802 und Carbodilite® V-02-L2, besonders bevorzugt ist Desmodur® 2802.

Als erfindungsgemäß einzusetzendes Polyaziridin eignen sich die dem Fachmann bekannten Verbindungen die über mehr als eine mit Carboxylgruppen reaktive Aziridingruppe enthalten. Beispiele für kommerziell erhältliche Polyaziridine sind PZ-28 und PZ-33 von Polyaziridine, LLC. Medford, N.J., USA, HD-105 von Shanghai Holdenchem CO, Ltd, Shanghai, China, und Neoadd Pax® 521, 523 und Crosslinker CX-100 von Covestro, und Xama 7 von ichemco Co, Italien. Besonders bevorzugt wird Crosslinker CX-100 von Covestro (Reaktionsmasse aus 2-Ethyl-2-[[3-(2-methylaziridin-1-yl) propionyl]methyl]propan-1,3-diyl bis(2-methylaziridin-1-propionat) und 2,2-bis({[3-(2-methylaziridin-1-yl)propanoyl]oxy} methyl)butyl3-[2,2-bis({[3-(2-methylaziridin-1-yl)propanoyl]oxy}methyl)butoxy]propanoat) eingesetzt.

Das Polycarbodiimid und / oder das Polyaziridin kann in Form einer Dispersion, einer Lösung, eines Feststoff oder einer Flüssigkeit vorliegen und eingesetzt werden, bevorzugt wird es in Form einer wässrigen Dispersion eingesetzt.

In einer bevorzugten Ausführungsform ist Komponente (C) mindestens ein Polycarbodiimid. In einer weiteren bevorzugten Ausführungsform weist Komponente (C) ein durchschnittliches Molekulargewicht (Mw) im Bereich von 500 g/mol bis 50.000 g/mol, besonders bevorzugt im Bereich von 1.000 g/mol bis 20.000 g/mol, noch bevorzugter im Bereich von 2.000 g/mol bis 5.000 g/mol auf, bestimmt gemäß DIN EN ISO 13885-2 (2021-11) mit N,N-Dimethlyacetamid als Eluent und Polystyrol als Standard.

In einer bevorzugten Ausführungsform ist die mindestens eine Komponente C) ein Polycarbodiimid und weist eine Glasübergangstemperatur von im Bereich von -100 °C bis 50 °C auf, bevorzugt im Bereich von - 60 °C bis 35 °C, besonders bevorzugt im Bereich von - 60 °C bis 30 °C, noch bevorzugter im Bereich von -50 °C bis 29 °C bestimmt gemäß DSC (differential scanning calometry) DIN EN ISO 11357-1 (2017-02).

In einer bevorzugten Ausführungsform weist das mindestens eine Polycarbodiimid einen Gehalt an Carbodiimidgruppen (-N=C=N-) im Bereich von 0,5 mmol/g bis 5 mmol/g, bestimmt durch ATR-Infrarotspektroskopie gegen einen Dicyclocarbodiimid-Standard auf, bezogen auf das Gesamtgewicht des mindestens einen Polycarbodiimids.In einer bevorzugten Ausführungsform ist das molare Verhältnis von Carbodiimidgruppen (-N=C=N-) in der Komponente C) zu den Carboxylgruppen (-COOH) in der Komponente B) im Bereich von 0,2:1 bis 5:1, bevorzugt im Bereich von 0,5 bis 2,9:1.

In einer bevorzugten Ausführungsform beträgt der Anteil von Komponente (C) in der wässrigen Klebstoffformulierung, bezogen auf gesamten Mengenanteile der Komponenten (A), (B), (C) und (D) als 100 Gew.-%, 1 Gew.-% bis 30 Gew.-%, vorzugsweise 3 Gew.-% bis 20 Gew.-%, der Komponente (C).

**Komponente (D)**

Die erfindungsgemäße wässrige Klebstoffformulierung und das erfindungsgemäße Kit-of-parts können gegebenenfalls als Komponente (D) mindestens ein weiteres Polymer enthalten, welches von dem mindestens einen Polymer (A) und dem mindestens einen Polyurethanpolymer (B) verschieden ist.

Als Komponente (D) eigenen sich beispielsweise Polyvinylester-, Polyvinylether-, Polyvinylakohol-, Polyethylen-, Polystyrol-, Polybutadien-, Polyvinylchlorid-, Polyurethan-, Polyurethan-Polyharnstoff-, Polyurethan-Polyacrylat-, Polyester-, Polyacrylat- und/oder Copolymerisate davon. Die als Komponente (D) geeigneten Polymere können als Feststoff, Lösung oder als Dispersion in einem flüssigen Medium vorliegen und eingesetzt werden. Vorzugsweise als Dispersionen bzw. Emulsionen bzw. wässrige oder organische Lösung. Dispersionen enthaltend Komponente (D) können auch zusammen mit anderen wässrigen bzw. lösemittelhaltigen Oligomeren bzw. Polymeren gemischt und gemeinsam eingesetzt werden. Bei solchen Mischungen muss jeweils durch einfache Vorversuche die Verträglichkeit geprüft werden.

In einer bevorzugten Ausführungsform beträgt der Anteil von Komponente (D) in der wässrigen Klebstoffformulierung, bezogen auf gesamten Mengenanteile der Komponenten (A), (B), (C) und (D) als 100 Gew.-%, 0 Gew.-% bis 30 Gew.-%, vorzugsweise 0 Gew.-% bis 25 Gew.-%, der Komponente (D).

In einer bevorzugten Ausführungsform weist das mindestens eine Polymer (D) eine partiellen Säurezahl im Bereich von 0 mg KOH / g bis 1 mg KOH /g, vorzugsweise im Bereich von 0 mg KOH / g bis 0,05 mg KOH /g, jeweils

bestimmt gemäß DIN EN ISO 2114:2000 (2002-06, Verfahren A mit einem Aceton-Ethanol-Lösungsmittelgemisch), auf.

In einer bevorzugten Ausführungsform weist das mindestens eine Polymer (D) keine Carboxylgruppen und / oder Carboxylatgruppen auf. In einer bevorzugten Ausführungsform weist das mindestens eine Polymer (D) keine Sulfongruppen und / oder Sulfonatgruppen auf.

Die erfindungsgemäße wässrige Klebstoffformulierung und das erfindungsgemäße Kit-of-parts können in einer bevorzugten Ausfiihrungsform gegebenenfalls mindestens einen Zusatzstoff enthalten, der verschieden von den Komponenten (A), (B), (C) und (D) ist.

Unter einen Zusatzstoff sind alle in der Beschichtungs- und Klebstofftechnologie bekannten Bindemitteln, Hilfsstoffen und Zugschlagstoffen, insbesondere Emulgatoren und Lichtschutzmitteln wie UV-Absorbern und sterisch gehinderte Aminen (HALS), weiterhin Antioxidantien, Füllstoffen und Hilfsmitteln, z.B. Antiabsetzmitteln, Entschäumungs- und/oder Netzmitteln, Verlaufshilfsmitteln, Reaktiv-Verdünnern, Weichmachern, Neutralisationsmitteln, Katalysatoren, Hilfslösemitteln und/oder Verdickern und Additiven, wie beispielsweise Pigmente, Farbstoffe oder Mattierungsmittel zu verstehen. Auch Klebrigmacher ("Tackifier") können als Zusatzstoff zugegeben werden. Die Zusatzstoffe sind unterschiedlich zu den Komponenten (A), (B), (C) und (D).

Die Zusatzstoffe können den erfindungsgemäßen Produkten unmittelbar vor der Verarbeitung zugegeben werden. Sie können alleine oder mit den Komponenten (A), (B), (C) und (D) zugegeben werden. Vorzugsweise werden die Komponenten (A), (B), (C) und (D) als Dispersionen in einem wässrigen Medium zugegeben. Es ist aber auch möglich, zumindest einen Teil der Zusatzstoffe vor oder während der Dispergierung des Bindemittels zuzugeben.

Die Auswahl und die Dosierung dieser Stoffe, die den Einzelkomponenten und/oder der Gesamtmischung zugegeben werden können, sind dem Fachmann prinzipiell bekannt und können ohne ungebührlich hohen Aufwand auf den speziellen Anwendungsfall zugeschnitten durch einfache Vorversuche ermittelt werden.

Die Herstellung der erfindungsgemäßen wässrigen Klebstoffformulierungen erfolgt bevorzugt durch Mischen der Komponenten miteinander.

Die vorliegende Erfindung betrifft daher auch ein Verfahren zur Herstellung der erfindungsgemäßen wässrigen Klebstoffformulierung durch Mischen der einzelnen Komponenten.

Bevorzugt umfasst die Herstellung der erfindungsgemäßen wässrigen Klebstoffformulierung mindestens die Schritte:

i) Bereitstellen der Komponenten (A), (B), (C), gegebenenfalls (D), gegebenenfalls mindestens ein Zusatzstoff und gegebenenfalls ein wässriges Medium, wobei die Komponenten (A), (B), (C) und gegebenenfalls (D) jeweils unabhängig voneinander als wässrige Dispersion vorliegen können, und

ii) Mischen der in Schritt i) bereitgestellten Komponenten sowie des gegebenenfalls mindestens einen Zusatzstoffs und gegebenenfalls Dispergieren in einem wässrigen Medium, um eine wässrige Klebstoffformulierung in Form einer wässrigen Dispersion zu erhalten.

In einer weiteren bevorzugten Auffuhrungsform umfasst die Herstellung der erfindungsgemäßen wässrigen Klebstoffformulierung mindestens die Schritte:

i) Bereitstellen der Komponenten (A), (B), (C) und gegebenenfalls (D);

ii) Dispergieren der Komponenten (A), (B), (C) und gegebenenfalls (D) in einem wässrigen Medium, um mindestens eine wässrige Dispersion zu erhalten; und

iii) gegebenenfalls Mischen der mindestens einen wässrigen Dispersion aus Schritt ii) mit mindestens einem Zusatzstoff, der verschieden von den Komponenten (A), (B), (C) und (D) ist, um eine wässrige Klebstoffformulierung zu erhalten;

oder

i') Bereitstellen mindestens einer ersten wässrigen Dispersion enthaltend die Komponente (A);

ii') Bereitstellen mindestens einer zweiten wässrigen Dispersion enthaltend die Komponente (B);

iii') Bereitstellen mindestens einer dritten wässrigen Dispersion enthaltend die Komponente (C);

iv') Gegebenenfalls bereitstellen mindestens einer vierten wässrigen Dispersion enthaltend die Komponente (D);v') Mischen der wässrigen Dispersionen aus Schritten i')-v'), in beliebiger Reihenfolge und gegebenenfalls mindestens einem Zusatzstoff, der verschieden von den Komponenten (A), (B), (C) und (D) ist, um eine wässrige Klebstoffformulierung zu erhalten.

Das erfindungsgemäße Verfahren zur Herstellung der erfindungsgemäßen wässrigen Klebstoffformulierung, wie auch die Herstellung der einzelnen eingesetzten Lösungen oder Dispersionen, kann im Allgemeinen bei allen dem Fachmann als geeignet erscheinenden Bedingungen erfolgen, beispielsweise bei einer Temperatur von 18 bis 28 °C,

idealerweise bei Raumtemperatur (23 °C), weiter bevorzugt in dem Fachmann bekannten Apparaturen, beispielweise in Edelstahl-, Glas- oder in emaillierten verfahrenstechnischen Apparaten. Bei der Herstellung der erfindungsgemäßen wässrigen Klebstoffformulierung sind Rostbildung und lösliche Metalllegierungen u.a. aus Aluminiumbehältern, zu vermeiden.

Die vorliegende Erfindung betrifft des Weiteren auch das erfindungsgemäße Verfahren zur Herstellung einer Klebung von Substraten, wobei eine erfindungsgemäße Klebstoffformulierung auf mindestens ein Substrat appliziert, dann getrocknet und gegebenenfalls auf eine Temperatur im Bereich von 40°C bis 200°C, bevorzugt 50°C bis 120°C, besonders bevorzugt 55°C bis 100°C erhitzt wird und anschließend ein Kleben erfolgt.

In einer weiteren bevorzugten Auffuhrungsform umfasst das erfindungsgemäße Verfahren zur Herstellung einer Klebung von Substraten die Schritte:

i) Bereitstellen mindestens eines Substrats;
ii) Auftragen der erfindungsgemäßen wässrigen Klebstoffformulierung auf mindestens einem Teil mindestens einer Oberfläche des mindestens einen Substrats aus Schritt i);
iii) Trocknen der mindestens einen Oberfläche des mindestens einen Substrats aus Schritt ii) auf welche die wässrigen Klebstoffformulierung aufgetragen wurde;
iv) Erhitzen der in Schritt iii) behandelten mindestens einen Substratoberfläche mittels IR-Strahlung, oder sonstiger geeigneter Wärmezuführung, wobei die mindestens eine Substratoberfläche, vorzugsweise auf eine Temperatur im Bereich von 40°C bis 200°C, bevorzugt 50°C bis 120°C, besonders bevorzugt 55°C bis 100°C wird; und
v) Inkontaktbringen der erhitzten mindestens einen Substratoberfläche aus Schritt iv) mit einem weiteren unbehandelten Teil der Oberfläche des mindestens einen Substrats oder mit mindestens einem Teil einer Oberfläche eines weiteren Substrats, um eine Klebung zu erhalten;

oder

i') Bereitstellen mindestens eines Substrats;
ii') Auftragen der erfindungsgemäßen wässrigen Klebstoffformulierung auf mindestens einem Teil mindestens einer Oberfläche des mindestens einen Substrats aus Schritt i');
iii') Trocknen der mindestens einen Oberfläche des mindestens einen Substrats aus Schritt ii') auf welche die wässrigen Klebstoffformulierung aufgetragen wurde; und
iv') Inkontaktbringen der mindestens einen Substratoberfläche aus Schritt iii‘) mit mindestens einem Teil mindestens einer Oberfläche mindestens eines weiteren erwärmten Substrats, um eine Klebung zu erhalten, wobei das mindestens eine weitere Substrat, vorzugsweise auf eine Temperatur im Bereich von 40°C bis 200°C, bevorzugt 50°C bis 120°C, besonders bevorzugt 55°C bis 100°C erhitzt ist;

oder

i") Bereitstellen von mindestens zwei Substraten;
ii") Auftragen der erfindungsgemäßen wässrigen Klebstoffformulierung auf jeweils mindestens einen Teils mindestens einer Oberfläche der mindestens zwei Substrate aus Schritt i");
iii") Trocknen der jeweils mindestens einen Oberfläche der mindestens zwei Substrate aus Schritt ii") auf welche jeweils die wässrigen Klebstoffformulierung aufgetragen wurde;
iv") Erhitzen der in Schritt iii") mindestens zwei jeweils behandelten Substratoberflächen mittels IR-Strahlung, oder sonstiger geeigneter Wärmezuführung, wobei die mindestens zwei Substratoberflächen, vorzugsweise auf eine Temperatur im Bereich von 40°C bis 200°C, bevorzugt 50°C bis 120°C, besonders bevorzugt 55°C bis 100°C erhitzt ist; und
v") Inkontaktbringen der mindestens einen wärmeaktivierten Substratoberfläche aus Schritt iv") mit der mindestens einen anderen wärmeaktivierten Substratoberfläche aus Schritt iv"), um eine Klebung zu erhalten.

In einer weiteren bevorzugten Auffiihrungsform umfasst das erfindungsgemäße Verfahren zur Herstellung einer Klebung von Substraten die folgenden Schritte:

i. Auftragen des erfindungsgemäßen Klebstoffs auf mindestens eine Oberfläche eines Substrats;
ii. Erwärmen und Trocknen der Substratoberfläche, auf die der Klebstoff aufgetragen wird;
iii. Wärmeaktivierung der in Schritt ii behandelten Substratoberfläche mittels IR-Strahlung, oder sonstiger geeigneter Wärmezuführung; und
iv. Inkontaktbringen der in Schritt iii behandelten Substratoberfläche mit einer Oberfläche des Substrats selbst oder eines zusätzlichen Substrats, um das geklebte Produkt zu erhalten.

Das Substrat ist vorzugsweise eines oder mehrere der folgenden Ausführung: Holz, Kunststoff, Metalle und Legierungen, Spannplatten, MDF-Platten, Keramik, Stein, Beton, Bitumen, Hartfaser, Glas, Glasfasern, Kohlenstofffasern, Kohlenstoffnanoröhrchen, Porzellan, Kunststoffen, Leder, Textilien und/oder textilen Fasern der verschiedensten Art, Gewebe, Kunstleder, Papier, Pappe, EVA, Gummi, Lederhaut, Ethylen-Vinylacetat-Copolymer, Polyolefin, thermoplastisches Polyurethan, Polyurethanschaum, Polymerfasern und Graphitfasern.

Die Substrate können vorbehandelt werden, um die Haftung des Klebefilms auf dem Substrat zu verbessern. Nützliche Vorbehandlungen sind z.B. Korona, Plasma, Flamme, chemische Grundierung, und Kombinationen davon.

Die erfindungsgemäße wässrige Klebstoffformulierung eignet sich ebenfalls zum Kleben von Gummimaterialien wie z. B. Natur- und Synthesekautschuken, verschiedenen Kunststoffen wie Polyurethanen, Polyvinylacetat, Polyvinylchlorid, insbesondere weichmacherhaltigem Polyvinylchlorid. Die Klebstoffe sind ebenfalls geeignet für das Verkleben von thermoplastischen Kunststoffen wie z.B. ABS (Acryl-Butadien-Styrol), PC (Polycarbonat) und deren Mischungen, sowie polyolefinischen Kunststoffen ggf. nach geeigneter Vorbehandlung.

Die Verarbeitung der erfindungsgemäßen wässrigen Klebstoffformulierung erfolgt nach den bekannten Methoden der Beschichtungstechnologie bzw. Klebstofftechnologie bezüglich der Anwendungen und Verarbeitung von wässrigen Dispersionen bzw. wässrigen Emulsionen bzw. wässrigen Lösungen.

Das "Auftragen" kann bedeuten, dass der Klebstoff auf die gesamte Oberfläche des Substrats oder nur auf einen oder mehrere Teile der Substratoberfläche aufgetragen wird.

Das "Auftragen" kann durch Streichen, Tauchen, Sprühen, Walzen, Rakeln, Fließen, Gießen, Drucken oder Transferdruck erfolgen, vorzugsweise durch Streichen, Tauchen oder Sprühen.

Das "Erhitzen und Trocknen der Substratoberfläche, auf die der Klebstoff aufgetragen wird" kann sich nur auf das Erhitzen und Trocknen der Substratoberfläche oder auf das Erhitzen und Trocknen eines Teils oder des gesamten Substrats einschließlich der Substratoberfläche, auf die der Klebstoff aufgetragen wird, beziehen.

Durch das "Erhitzen und Trocknen" kann ein flüchtiger Bestandteil entfernt werden. Bei der flüchtigen Komponente kann es sich um Wasser handeln.

Das "Erhitzen und Trocknen" erfolgt vorzugsweise durch eine oder mehrere der folgenden Maßnahmen: Infrarot-Wärmestrahlung, Nah-Infrarot-Wärmestrahlung, Mikrowellen und Verwendung eines Konvektionsofens bei erhöhter Temperatur.

Die Heiztemperatur ist so hoch wie möglich, sollte aber nicht über der Temperaturgrenze liegen, bei der das Substrat unkontrolliert verformt oder anderweitig beschädigt wird.

Bei der Verwendung der erfindungsgemäßen wässrigen Klebstoffformulierung z.B. für Klebstoffe zum Kleben von Substraten wird häufig nach dem Thermoaktivierverfahren gearbeitet. Hierbei wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur.

Das "In-Kontakt-Bringen" erfolgt vorzugsweise, bevor die Temperatur der Substratoberfläche niedriger ist als die Temperatur, bei der der Klebstoff klebbar ist, und vorzugsweise, bevor die Temperatur der Substratoberfläche nicht unter 55 °C liegt.

Die in Schritt iv behandelte Substratoberfläche wird vorzugsweise innerhalb einer Stunde, weiter vorzugsweise innerhalb von 30 Minuten, noch bevorzugter innerhalb von 10 Minuten und am meisten bevorzugt innerhalb von 5 Minuten mit dem Substrat selbst oder einem zusätzlichen Substrat in Kontakt gebracht, um das gebundene Produkt zu erhalten.

Das zusätzliche Substrat kann jedes beliebige Substrat sein, das geklebt werden muss.

Das zusätzliche Substrat kann mit dem Substrat identisch sein oder sich von ihm unterscheiden.

Wie das Substrat wird auch das zusätzliche Substrat vorzugsweise beschichtet, erhitzt und mit Wärme aktiviert.

Nach dem Kontakt der in Schritt ii behandelten oder in Schritt iv behandelten Substratoberfläche mit dem Substrat selbst oder dem zusätzlichen Substrat kann eine weitere Kühlbehandlung durchgeführt werden, um die Temperatur des verklebten Produkts auf Raumtemperatur zu senken.

Die Methode der Wärmezufuhr ist vorzugsweise eine oder mehrere der folgenden: Verwendung eines Konvektionsofens oder Infrarot-Wärmestrahlung, Nahinfrarot-Wärmestrahlung, Mikrowellen und Wärmeübertragung durch einen Gegenstand, der mit dem mit dem erfindungsgemäßen Klebstoff beschichteten Substrat in Kontakt kommt.

Ein weiterer Gegenstand der vorliegenden Erfindung ist die Verwendung der erfindungsgemäßen wässrigen Klebstoffformulierung zur Herstellung von latent-reaktiven Klebstoffschichten, selbstragenden, latent-reaktiven Klebstofffilmen und latent-reaktiven Klebstoffpulvern.

Ein weiterer Gegenstand der vorliegenden Erfindung ist die Verwendung von latent-reaktiven Klebstoffschichten, selbstragenden, latent-reaktiven Klebstofffilmen und latent-reaktiven Klebstoffpulvern, jeweils enthaltend die erfindungsgemäße wässrige Klebstoffformulierung zum Kleben oder Verbinden von Substraten.

Die wässrige Klebstoffformulierung in Form einer wässrigen Dispersion kann auch auf Trennpapier (z. B. Silikonpapier oder polyolefinisch antihaftend ausgerüsteten Papier oder ähnlichen Trägermaterialien) im Sprüh-, Rakel-, Pinsel-, oder Walzenauftragsverfahren appliziert werden. Nach dem Trocknen erhält man selbsttragende latent-reaktive Filme oder Vliese, die ggf. nach Einlegen eines Trennpapiers, aufgewickelt und bis zum Einsatz als Klebstofffilm gelagert

werden können.

Aus der wässrige Klebstoffformulierung in Form einer wässrigen Dispersion kann durch geeignete technische Verfahren ein latent-reaktives Klebstoffpulver in Form eines Granulates oder Pulvers gewonnen werden.

Zum Beispiel kann die wässrige Klebstoffformulierung in Form einer wässrigen Dispersion durch Sprühtrocknung vom Wasser befreit werden. Man erhält so ein latent-reaktive Klebstoffpulver, die ggf. durch einen sich anschließenden Mahlprozess auf kleine Partikelgrößen gemahlen werden können.

Eine weitere Möglichkeit zur Herstellung latent-reaktiver Pulver besteht im Ausfrieren zumindest eines Teil der in der wässrige Klebstoffformulierung in Form einer wässrigen Dispersion enthaltenen Bestandteilen bei Temperaturen unterhalb von 0°C. Dabei anfallende Feststoffe werden anschließend vom Wasser durch Filtration, Zentrifugieren etc. weitgehend befreit und abschließend getrocknet. Das erhaltene grobkörnige Pulver kann dann durch geeignete Mahlung z.B. in Kugel-, Perl-, Sandmühlen oder Strahlmühlen auf die geforderten Partikelgrößen gebracht werden.

Ein weiterer Gegenstand der vorliegenden Erfindung ist die Verwendung des erfindungsgemäßen Kit-of-parts zur Herstellung von latent-reaktiven Klebstoffschichten, selbstragenden, latent-reaktiven Klebstofffilmen und latent-reaktiven Klebstoffpulvern.

Ein weiterer Gegenstand der vorliegenden Erfindung ist die Verwendung der erfindungsgemäßen wässrigen Klebstoffformulierung zum Kleben von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zum Kleben von Schaumstoffen in der Matratzen-, Möbel- und/oder Polsterherstellung.

Ein weiterer Gegenstand der vorliegenden Erfindung ist ein Artikel hergestellt unter Verwendung der erfindungsgemäßen wässrigen Klebstoffformulierung, wobei der Artikel vorzugsweise ein mit thermoplastischer Folie laminiertes Formteil, vorzugsweise aus Kunststoff, Holz oder einem Holzwerkstoff wie beispielsweise MDF ist.

In einer weiteren bevorzugten Ausfiihrungsform handelt es sich bei dem Artikel um einen Schuh- oder ein Möbelstück. Zudem kann der hier entwickelte erfindungsgemäße wässrige Klebstoffformulierung auch in weiteren Anwendungen zum Einsatz kommen, wie z.B. bei der Verklebung von Automobil-Innenteile.

## Beispiele

Die vorliegende Erfindung wird anhand der nachfolgenden Beispiele weiter erläutert, ohne darauf beschränkt zu sein.

### *Rohstoffe und Reagenzien*

| | |
|---|---|
| Polyester I: | Polyesterdiol aus 1,4-Butandiol und Adipinsäure, OH-Zahl 50 |
| Polyester II: | Polyesterdiol aus 1,6-Hexandiol, Neopentylglycol und Adipinsäure, OH-Zahl 56 |
| Polyester III: | Polyesterdiol aus 1,6-Hexandiol und Adipinsäure, OH-Zahl 50 |
| Desmodur® H: | Hexamethylendiisocyanat-1,6 (Covestro Deutschland AG, Leverkusen/DE) |
| Desmodur® I: | Isophorondiisocyanat (Covestro Deutschland AG, Leverkusen/DE) |
| Lucramul® 1820 liq: | Emulgator, 15 gew.-%ige Lösung von Stearylalkoholpolyglykolether in Wasser (LEVACO Chemicals GmbH, Leverkusen) |

### *Desmodur® 2802*

Desmodur® 2802 ist ein hydrophil modifiziertes Polycarbodiimid mit einem nichtflüchtigen Anteilvon 40 Gew.-%, einem Carbodiimidgruppengehalt von etwa 1,4 meq DCC/g), , einem gewichtsmittleren Molekulargewicht Mw von 3258 und einer durchschnittlichen Carbodiimidgruppenfunktionalität von 4,5, bezogen von Covestro AG. Aus dem nichtflüchtigen Anteil und dem Carbodiimidgruppengehalt berechnet sich eine Carbodiimidkonzentration von 3,5 meq DCC für das getrocknete Polycarbodiimid. Die Glasübergangstemperatur ist -30°C.

### *Dispercoll® U 2824*

Dispercoll® U 2824 (Covestro Deutschland AG, Leverkusen/D) ist eine carboxylatstabilisierte Polyesterpolyurethan-Dispersion enthaltend Dimethylpropionsäure als Aufbaukomponente (nichtflüchtiger Anteil der Dispersion 40%).

Das enthaltene Polymer ist in der DSC-Messung teilkristallin. Die Polyurethandispersion besitzt eine partielle Säurezahl von 4,0 mg KOH/g. Die partielle Säurezahl des getrockneten Polymers ist 10 mg KOH/g. Das getrocknete Dispersionspolymer besitzt eine Schmelzenthalpie von 51 J/g und eine Schmelztemperatur von ca. 47 °C. Das mittlere Molekulargewicht Mw ist 65.000 g/mol.

***Dispercoll® UXP 2643***

Dispercoll® U XP 2643 (Covestro Deutschland AG, Leverkusen/D) ist eine carboxylatstabilisierte Polyurethan-Dispersion auf Basis eines Polyethers und Dimethylpropionsäure (nichtflüchtiger Anteil der Dispersion 40%). Das getrocknete Polymer weist in der DSC-Messung keinen Schmelzpeak auf, die Glasübergangstemperatur ist - 51 °C. Das Produkt besitzt eine Säurezahl von 4,0 mg KOH/g. Die partielle Säurezahl des getrockneten Polymers ist 10 mg KOH/g. Das mittlere Molekulargewicht Mw ist 64.000 g/mol.

***Dispercoll® U 42***

Dispercoll® U 42 (Covestro Deutschland AG, Leverkusen/D) ist eine sulfonatstabilisierte Polyurethan-Dispersion auf Basis eines Polyesters (Festkörpergehalt der Dispersion 50%). Das getrocknete Polymer weist in der DSC-Messung keinen Schmelzpeak auf, die Glasübergangstemperatur ist -5 °C. Die partielle Säurezahl ist 0 mg KOH/g. Das mittlere Molekulargewicht Mw 219.000 g/mol.

***Herstellung von wässrigen Polyurethan-Dispersionen***

**Polyurethandispersion PUD-A-1**

578 g Polyester III wurden 1 Stunde bei 110°C und 15 mbar entwässert. Bei 60°C wurden unter Rühren zunächst 9,9 g 1,4-Butandiol zugegeben. Danach wurden bei 80°C 40,7 g Desmodur® I und 62,1 g Desmodur® H zugegeben und die Mischung bei 100°C gerührt, bis ein konstanter Isocyanatgehalt von 2,2 % erreicht wurde. Das Reaktionsgemisch wurde in 1038 g Aceton gelöst und dabei auf 48°C abgekühlt. In die homogene Lösung wurde eine Lösung aus 21,8 g Natriumsalz der N-(2-Aminoethyl)-2-aminoethansulfonsäure 4,7 g Ethylendiamin in 36,6 g Wasser unter kräftigem Rühren gegeben. Nach 30 Minuten wurd durch Zugabe von 976 g Wasser dispergiert. Nach destillativer Abtrennung des Acetons wurde eine wässrige Polyurethan-Polyharnstoff-Dispersion mit einem nichtflüchtigen Anteil von 40% erhalten. Das getrocknete Dispersionspolymer besitzt eine Schmelzenthalpie von ca. 56 J/g und eine Schmelztemperatur von ca. 51 °C, sowie eine Glasübergangstemperatur von -54 °C. Das mittlere Molekulargewicht Mw ist 330.000 g/mol. Die partielle Säurezahl des getrockneten Polymers ist 0,9 mg KOH/g.

**Polyurethandispersion PUD-A-2**

450 g Polyester I und 42,67 g Polyester II wurden 1 Stunde bei 110 °C und 15 mbar A entwässert. Bei 60 °C wurden unter Rühren zunächst 2,24 g 1,4-Butandiol und danach eine Mischung aus 38,02 g Desmodur® H und 25,11 g Desmodur® I zugegeben. Die Mischung wurde auf 80 °C erwärmt und solange gerührt, bis ein konstanter Isocyanatgehalt von 1,30 Gew.-% erreicht wurde. Das Reaktionsgemisch wurde in 770 g Aceton gelöst und dabei auf 48 °C abgekühlt. In die homogene Lösung wurde eine Lösung aus 6,56 g Natriumsalz der N-(2-Aminoethyl)-2-aminoethansulfonsäure und 5,16 g Diethanolamin in 100 g Wasser unter kräftigem Rühren gegeben. Nach 30 Minuten wurde durch Zugabe von 470 g Wasser dispergiert. Nach destillativer Abtrennung des Acetons wurde eine wässrige Polyurethan-Polyharnstoff-Dispersion mit einem nichtflüchtigen Anteil von 50% erhalten. Das enthaltene Polymer ist nach der Trocknung teilkristallin mit einer Schmelztemperatur von 49 °C und einer Schmelzenthalpie von 57,0 J/g, sowie eine Glasübergangstemperatur von -57 °C. Das mittlere Molekulargewicht ist 97.000 g/mol. Die partielle Säurezahl ist 0 mg KOH/g.

***Herstellung des Klebstoffs***

In ein Plastikbecher mit verschraubbarem Deckel werden die in der Tabelle 1 genannten Bestandteile der wässrigen Klebstoffdispersionen nacheinander eingewogen. Die Vermischung erfolgt bei 1000 Umdrehungen pro Minute für 3 Minuten im Speedmixer®.

Man erhält niedrigviskose wässrige Klebstoffformulierungen, die auch nach mehreren Wochen Lagerung bei Normbedingungen keine Anzeichen von Viskositätsanstieg oder Sedimentation zeigen.

***Test-Verfahren***

Alle analytischen Bestimmungen und Test-Verfahren beziehen sich, soweit nicht anders angegeben. auf eine Temperatur von 23° C.

*Ermittlung der partiellen Säurezahl*

Die Bestimmung der partiellen Säurezahl erfolgt gemäß DIN EN ISO 2114:2000 (2002-06, Verfahren A), wobei an Stelle des unter 5.1 beschriebenen Lösemittelgemisches aus 2 Volumenteilen Toluol (5.7) und 1 Volumenteil Ethanol (5.5) ein Lösemittelgemisch aus 2 Volumenteilen Aceton (5.4) und 1 Volumenteil Ethanol (5.5) verwendet wurde.
Zur Bestimmung der Säurezahl der Polymerdispersionen wurden diese, wenn nicht anders vermerkt direkt eingesetzt. Die verwendeten Probenmengen richteten sich nach den Angaben unter 7.1.
Die partielle Säurezahl des getrockneten Polymers entspricht der unter 8.1.2 beschriebenen partiellen Säurezahl des Festharzes und wird analog berechnet.

*Ermittlung der nicht-flüchtigen Anteile*

Der Ermittlung der nicht-flüchtigen Anteile der Polymerdispersionen erfolgte nach DIN EN ISO 3251, Einwaage 1 g, Trocknung für 1 h bei 125 °C.

*Ermittlung der Glasübergangstemperaturen, Schmelztemperaturen und Schmelzenthalpien mittels Differential Scanning Calorimetry (DSC)*

Die Glasübergangstemperaturen, Schmelztemperaturen und Schmelzenthalpien wurden mittels Differential Scanning Calorimetry (DSC) mit einem Kalorimeter DSC Q2000 der Fa. TA Instruments bestimmt.
Die Bestimmung erfolgt gemäß DIN EN ISO 11357-1:2017 (2017-02) - Kunststoffe - Dynamische Differenz-Thermoanalyse (DSC) -Teil 1: Allgemeine Grundlagen (ISO 11357-1:2016); Deutsche Fassung EN ISO 11357-1:2016 und den Normteilen

DIN EN ISO 11357-2:2020-08 - Kunststoffe -Dynamische Differenzkalorimetrie (DSC) -Teil 2: Bestimmung der Glasübergangstemperatur und der Glasübergangsstufenhöhe (ISO 11357-2:2020); Deutsche Fassung EN ISO 11357-2:2020

DIN EN ISO 11357-3:2018-07 - Kunststoffe - Dynamische Differenz-Thermoanalyse (DSC) - Teil 3: Bestimmung der Schmelz- und Kristallisationstemperatur und der Schmelz- und Kristallisationsenthalpie (ISO 11357-3:2018).

*Probenvorbereitung für wässrige Dispersionen*

Dazu wurde ein Film durch Rakeln der Dispersion mit 100 μm Nassfilmdicke auf einer Glasplatte hergestellt, 2 Stunden lang bei 23°C und 50% relativer Luftfeuchte vorgetrocknet, die beschichtete Glasplatte wird anschließend in eine Trockenbox überführt und dort für 3 Tage bei 23°C und 0% relativer Luftfeuchte gelagert.
Die beschichtete Glasplatte wird aus der Trockenbox entnommen und ca. 5 mg Probenmaterial für die DSC Messung verwendet.
Es wird folgendes Messprogramm durchgeführt
Schnelle Abkühlung auf die Starttemperatur -100 °C, danach Beginn von drei Aufheizungen von - 100 °C bis +150 °C mit einer Heizrate von 20 K/min und einer Kühlrate von 320 K/min unter Stickstoff-Atmosphäre und Kühlung mit flüssigem Stickstoff.

*Ermittlung der Glasübergangstemperaturen*

Die Ermittlung der Glasübergangstemperaturen (Tg) erfolgte gemäß den Angaben DIN EN ISO 11357-2:2020-08
Die Glastemperatur entspricht der Temperatur bei halber Höhe des Glasübergangs, wobei die dritte Aufheizung ausgewertet wurde. Sollte sich keine Glasübergangstemperatur ermitteln lassen, wird das Messprogramm wie folgt geändert. Schnelle Abkühlung auf die Starttemperatur -140 °C, danach Beginn von drei Aufheizungen von -140 °C bis +150 °C mit einer Heizrate von 20 K/min und einer Kühlrate von 320 K/min.

*Ermittlung der Schmelztemperaturen*

Zur Ermittlung der Schmelztemperaturen wird die erste Aufheizung herangezogen, die angegebenen Schmelztemperaturen entsprechen den Peakkristallisationstemperaturen.

*Ermittlung der Schmelzenthalpien*

Zur Ermittlung der Schmelzenthalpien wird die erste Aufheizung herangezogen. Im Falle mehrerer Schmelzpeaks werden die Schmelzenthalpien aller Schmelzpeaks mit einer Peakschmelztemperatur Tp,m im Bereich von 15 bis 80 C addiert. Peaks mit Schmelzenthalpien von >0,9 J/g werden nicht betrachtet.

*Bestimmung des Molekulargewichts*

Die Bestimmung des Molekulargewichtes Mn, Mw, Mz erfolgt gemäß DIN EN ISO 13885-2:2021-11 mit N,N-Dimethlyacetamid als Eluent gegen einen Polystyrolstandard.

*Berechnung des molaren Verhältnis von Carbodiimidgruppen (-N=C=N-) in der Komponente C) zu den Carboxylgruppen (-COOH) in der Komponente* (B)Das molaren Verhältnis von Carbodiimidgruppen (-N=C=N-) in der Komponente C) zu den Carboxylgruppen (-COOH) in der Komponente (B) CDI/COOH wird berechnet aus der Stoffmenge der Carbodiimidgruppen nCDI [meq DCC] in der Komponente (C) und der Stoffmenge der Carboxylgruppen nCOOH [mmol/g] der Komponente (B).

Die Stoffmenge der COOH Gruppen nCOOH in der Komponente (B) wird anhand folgender Formel berechnet:

$$\text{nCOOH} = \text{partielle Säurezahl [mg KOH / g] x Masse [g] / 56,1[mmol / mg KOH]}$$

Sollte die Komponente (B) aus mehreren Polymeren bestehen, kann so für jedes Polymer die Stoffmenge berechnet und die einzelnen Stoffmengen addiert werden.

*Bestimmung der Carbodiimidkonzentration in der Komponente C*

Die Bestimmung der Carbodiimid-Konzentration erfolgt mit ATR-Infrarotspektroskopie am Gerät Perkin Elmer Spectrum two. (ATR ist eine Abkürzung für englisch "attenuated total reflection". übersetzt "abgeschwächte Totalreflexion".

Zunächst wird Dicyclohexylcarbodiimid (DCC) in Ethanol gelöst (Konzentrationen: 0,1 mmol/g, 0,2 mmol/g, 0,5 mmol/g, 1,0 mmol/g, 1,5 mmol/g und 2 mmol/g). Von diesen Lösungen wurden die IR-Spektren aufgenommen. Die Peakflächen (PA) der Carbodiimidbande bei ca. 2118 cm-1 werden ermittelt. Aus den Daten (Konzentration c der DCC-Lösungen und den ermittelten PA) wird eine Kalibriergerade erstellt:

$$\text{PA} = \text{m} \cdot \text{c [meq DCC/g]},$$

wobei m die Steigung der Kalibriergeraden darstellt.

Falls die in der in der Komponente C) einzusetzenden Polycarbodiimide als wässrige Dispersion vorliegen, wird die wässrige Dispersion direkt in der ATR-Infrarotspektroskopie untersucht. Die Bestimmung der Carbodiimid-Konzentration erfolgt über PA der Bande bei ca. 2118 cm-1. Die Carbodiimidkonzentration c der wässrigen Dispersion [meq DCC/g] wird gemäß der Formel PA/m berechnet. Daraus kann unter Berücksichtigung des nichtflüchtigen Anteils der Dispersion die Carbodiimidkonzentration c) des Polycarbodimides berechnet werden. Aus der Carbodiimidkonzentration der Komponente C) und der Masse der Komponente C) Mc wird die Stoffmenge an Carboddimidgruppen nCDI [meq DCC] ermittelt.

$$\text{nCDI [meq DCC]} = \text{Mc [g] x c [meg DCC /g]Im Falle von als Feststoff vorliegenden Carbodiimiden}$$

wird die Carbodiimidkonzentration wie in der WO2020216680A1 beschrieben an einer 25%igen Lösung in Toluol ermittelt und auf den Feststoff umgerechnet.

Das Verhältnis von Carbodiimidgruppen in der Komponente (C) zu den Carbonsäuregruppen in der Komponente (B) für das Beispiel 7 in Tabelle 1 wird wie folgt berechnet.

$$\text{nCOOH} = \text{10 [mg KOH / g ] x 40\% x 50 g / 56,1 [mmol / mg KOH]} = \text{3,57 mmol}$$

$$nCDI\ [meq\ DCC] = 7{,}1\ [g] \times 40\% \times 3{,}5\ [meq\ DCC / g] = 9{,}94\ [meq\ DCC]$$

Das Verhältnis von Carbodiimidgruppen in der Komponente (C) zu den Carbonsäuregruppen in der Komponente (B) für das Beispiel 7 ist 9,94 zu 3,57 bzw. 2,8 : 1.

*Bestimmung der Wärmebeständigkeit durch eine Softening Point Messung (Zugscherbelastung)*

Die Bestimmung der Softening Point-Werte erfolgte an einer Canvas- Canvas Verbundkombination.

Auf die Prüfkörper (25 mm x 50 mm) aus Baumwollgewebe werden die Klebstoffdispersionen mit einem Pinsel aufgetragen, sodass sich 20 mm x 10 mm große Klebeflächen ergeben.

Die Klebstoffschicht wird für 30 min. bei 23°C / 50% relativer Luftfeuchte getrocknet. Dann wird eine zweite Klebstoffschicht mit dem Pinsel aufgetragen. Anschließend wird für weitere 60 min. bei 23°C / 50% relativer Luftfeuchte getrocknet. Die mit Klebstoff beschichteten Prüfkörper werden für 10 Sekunden mit dem IR-Strahler der Fa. Funck (Schockaktiviergerät 2000) wärmeaktiviert. Die Temperatur der Oberfläche der Klebstoffschicht steigt dabei auf ca. 90°C an. Die Herstellung der Klebeverbindung erfolgt unmittelbar nach der Wärmeaktivierung, indem die aktivierten Klebstoffschichten gegeneinander für 1 min. in einer Presse bei 4 bar verpresst werden. Die so hergestellten Prüfkörper werden 1 Woche im Normklima (23°C / 50% relativer Luftfeuchte) gelagert.

Nach der Lagerung werden die Prüfkörper mit 4 kg belastet (Zugscherbelastung) und in einem Heizschrank innerhalb von 30 min. auf 40°C temperiert. Anschließend werden die Prüfkörper mit einer linearen Heizrate von 0,5K/min. bis auf 150°C aufgeheizt. Die Erweichungstemperatur, d.h. die Temperatur in °C bei der die Klebeverbindung unter der Last von 4 kg versagt, wird registriert (= Softening-Pont). Es werden jeweils 5 Einzelmessungen durchgeführt und der Mittelwert bestimmt und angegeben.

*Bestimmung der Wärmebeständigkeit nach Lagerung durch eine Softening Point Messung (= Zugscherbelastung) zur Bestimmung der offenen Zeit der getrockneten Klebstoffschicht*

Die Bestimmung der Softening Point-Werte erfolgte an einer Canvas- Canvas Verbundkombination.

Auf die Prüfkörper (25 mm x 50 mm) aus Baumwollgewebe werden die Klebstoffdispersionen mit einem Pinsel aufgetragen, sodass sich 20 mm x 10 mm große Klebeflächen ergeben. Die Klebstoffschicht wird 30 min. bei 23°C / 50% relative Luftfeuchte getrocknet. Dann wird eine zweite Klebstoffschicht mit dem Pinsel aufgetragen. Die Klebstoffschicht wird 30 min. bei 23°C / 50% relativer Luftfeuchtegetrocknet. Dann wird eine zweite Klebstoffschicht mit dem Pinsel aufgetragen. Anschließend wird für weitere 60 min. bei 23°C / 50% relativer Luftfeuchte getrocknet.

Nach der Trocknung der Klebstoffschicht, werden die beschichteten Canvas-Substrate, vor der Wärmeaktivierung und Fügung, für unterschiedliche Zeiträume (Stunden bis Wochen) im Normklima (23°C / 50% relativer Luftfeuchte) gelagert. Die offene Zeit ist die maximale Lagerdauer, nach der mit der im Folgenden beschriebenen Messmethode noch ein Softening Point von 100 °C oder höher erreicht wird.

Die mit Klebstoff beschichteten Prüfkörper werden für 10 Sekunden mit dem IR-Strahler der Fa. Funck (Schockaktiviergerät 2000) wärmeaktiviert. Die Temperatur der Oberfläche der Klebstoffschicht steigt dabei auf ca. 90°C an. Die Herstellung der Klebeverbindung erfolgt unmittelbar nach der Wärmeaktivierung, indem die aktivierten Klebstoffschichten gegeneinander für 1 min. in einer Presse bei 4 bar verpresst werden. Die so hergestellten Prüfkörper werden 1 Woche im Normklima (23°C / 50% relativer Luftfeuchte) gelagert.

Nach der Lagerung werden die Prüfkörper mit 4 kg belastet und in einem Heizschrank innerhalb von 30 min. auf 40°C temperiert. Anschließend werden die Prüfkörper mit einer linearen Heizrate von 0,5K/min. auf 150°C aufgeheizt. Die Erweichungstemperatur, d.h. die Temperatur in °C bei der die Klebeverbindung unter der Last von 4 kg versagt, wird registriert (= Softening-Pont). Es werden jeweils 5 Einzelmessungen durchgeführt und der Mittelwert bestimmt und angegeben. (Figur 1)

*Test-Ergebnisse*

Tabelle 1: *Wärmebeständigkeiten von wässrigen Klebstoffformulierungen sofort nach Trocknung und nach Lagerung (Softening Point Messung)*

| Beispiel-Nr. | 1 | 2 | 3 | 4 | 5 | 6 | 7 | 8 | 9 | 10 | 11 | 12 | 13 | 14 | 15 | 16 | |
|---|---|---|---|---|---|---|---|---|---|---|---|---|---|---|---|---|---|
| Beispiel-Typ* | V | V | V | V | V | E | E | V | V | V | E | V | E | E | E | E | |
| Rohstoffe | Einsatzmenge in g | | | | | | | | | | | | | | | | |
| Dispercoll U 2824 | 100 | 100 | | | 50 | 50 | 50 | | | 50 | 50 | 50 | 50 | 70 | 30 | 20 | |
| Dispercoll U 2643 | | | 100 | 100 | | | | 50 | 50 | | | | | | | | |
| PU-A-1 | | | | | 50 | 50 | 50 | 50 | 50 | | | | | 30 | 70 | 80 | |
| PU-A-2 | | | | | | | | | | | | 50 | 50 | | | | |
| Dispercoll U 42 | | | | | | | | | | 50 | 50 | | | | | | |
| Desmodur 2802 | - | 14, 3 | - | 14, 3 | - | 3,6 | 7,1 | - | 7,1 | - | 7,1 | - | 7,1 | 10, 0 | 4,3 | 2,9 | |
| | | | | | | | | | | | | | | | | | |
| Softening-Point [°C] (Fügung und Wärmeaktivierung direkt nach der Trocknung des Klebstoffs) | 49 | 150 | 51 | 146 | 60 | 150 | 150 | 53 | 146 | 56 | 150 | 57 | 146 | 150 | 150 | 150 | |
| | | | | | | | | | | | | | | | | | |
| Softening-Point nach Lagerung der vorbeschichteten Substrate bei 23°C/ 50% rH [°C]* (Fügung und Wärmeaktivierung nach Lagerung des getrockneten Klebstoffs) | | | | | | | | | | | | | | | | | |
| nach 1 Stunde Lagerung | - | - | - | 110 | - | - | - | - | 147 | - | - | - | - | - | - | - | |
| nach 3 Stunden Lagerung | - | - | - | 97 | - | 150 | 147 | - | 146 | - | - | - | - | - | - | - | |
| nach 5 Stunden Lagerung | - | - | - | 90 | - | 150 | 147 | - | 146 | - | - | - | - | - | - | - | - |
| nach 24 Stunden Lagerung | - | - | - | 62 | - | 150 | 147 | - | 68 | - | - | - | - | - | - | - | - |
| nach 48 Stunden Lagerung | - | - | - | - | - | 146 | 147 | - | 68 | - | - | - | - | - | - | - | - |
| nach 1 Woche Lagerung | - | 147 | - | - | - | 147 | 146 | - | - | - | 150 | - | 109 | 127 | 136 | 142 | |
| nach 2 Wochen Lagerung | - | 147 | - | - | - | - | 147 | - | - | - | 147 | - | - | - | - | - | - |
| nach 3 Wochen Lagerung | - | 120 | - | - | - | - | 137 | - | - | - | 147 | - | - | - | - | - | - |
| nach 4 Wochen Lagerung | - | 93 | - | - | - | - | 147 | - | - | - | 150 | - | - | - | - | - | - |
| nach 6 Wochen Lagerung | - | 71 | - | - | - | 149 | 148 | - | - | - | 150 | - | - | - | - | - | - |

(fortgesetzt)

| Softening-Point nach Lagerung der vorbeschichteten Substrate bei 23°C/ 50% rH [°C]* (Fügung und Wärmeaktivierung nach Lagerung des getrockneten Klebstoffs) | | | | | | | | | | | | | | | | | |
|---|---|---|---|---|---|---|---|---|---|---|---|---|---|---|---|---|---|
| nach 8 Wochen Lagerung | - | 61 | - | - | - | 145 | 150 | - | - | - | 150 | - | - | - | - | - | - |
| *Erfindungsgemäße Beispiele sind mit E, Vergleichsbeispiele mit V gekennzeichnet. | | | | | | | | | | | | | | | | | |

Es zeigt sich in den Vergleichsbeispielen 1,3" 5,8,10,12, dass sowohl Carboxylgruppen enthaltende als auch nicht Carboxylgruppen enthaltende Polyurethane und auch deren Gemische ohne Einsatz von einem Polycarbodiimid nicht zu ausreichenden Wärmebeständigkeiten der Klebverbindungen führen.

Es zeigt sich anhand des Vergleichsbeispiels 4, dass eine Kombination von einer amorphen Carboxylgruppen enthaltenden Polymerdispersion mit einem Polycarbodiimid bei unmittelbarer Wärmeaktivierung zwar zu Klebverbindungen führt, die eine ausreichende Wärmebeständigkeit haben, jedoch zeigen die Klebstofffilme keine ausreichende offene Zeit bei Lagerung unter Standardbedingungen. Bereits nach 3h ist die Vernetzung der Klebstofffilme soweit fortgeschritten, dass beim Fügeprozess keine Klebverbindung mit ausreichender Wärmebeständigkeit mehr erreicht wird. Offensichtlich verfügen die bereits vernetzten Polymere bei der gewählten Aktiviertemperatur von 90 °C nicht mehr über eine ausreichende Klebrigkeit um miteinander eine wärmebeständige Klebverbindung einzugehen.

Das gleiche Ergebnis erhält man im Vergleichsbeispiel 9. Durch Kombination einer teilkristallinen nicht Carboxylgruppen enthaltenden Polymerdispersion mit einer amorphen Carboxylgruppen enthaltenden Polymerdispersion und einem Polycarbodiimid wird ebenfalls keine ausreichende offene Zeit des Klebstofffilmes erreicht.

Das erfindungsgemäße Beispiel 11 zeigt dagegen, dass eine ausreichende offene Zeit erreicht wird, wenn das nicht Carboxylgruppen enthaltende Polymer amorph ist, das Carboxylgruppen enthaltende Polymer aber teilkristallin ist.

Vergleichsbeispiel 2, das ausschließlich auf eine Carboxylgruppen enthaltenden Polymerdispersion und einem Polycarbodiimid basiert, zeigt zwar eine offene Zeit von mehr als 3 Wochen, jedoch ist der benötigte Einsatz von Polycarbodiimid deutlich höher und die offene Zeit kürzer als in den erfindungsgemäßen Beispielen 6 bzw. 7.

Die erfindungsgemäßen Beispiele 6, 7, 14, 15, 16 belegen, dass der Einsatz von nicht Carbonylgruppen enthaltenden Polymerdispersionen mit einem hohen Molekulargewicht in Kombination mit Carboxylgruppen enthaltenden Polymerdispersionen auch bei geringer Menge an Polycarbodimid zu hohen Wärmebeständigkeiten bei Klebung sowohl sofort nach Trocknung des Klebstoffs als auch nach Lagerung der getrockneten Klebstoffschicht für 1 Woche führen. Demgegenüber sind die Wärmebeständigkeiten beim erfindungsgemäßen Beispiel 13 (nicht Carboxylgruppen enthaltende Polymerdispersion geringerem Molekulargewicht) mit vergleichbar hohem Polycarbodiimidanteil sofort und nach 1 Woche Lagerung etwas geringer.

**Patentansprüche**

1. Wässrige Klebstoffformulierung in Form einer wässrigen Dispersion enthaltend mindestens die folgenden dispergierten Komponenten:

   (A) mindestens ein Polymer ausgewählt aus der Gruppe bestehend aus Polyurethanpolymeren, Vinylpolymeren, Polyesterpolymeren und / oder Mischungen aus mindestens zwei davon, wobei das Polymer eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweist;
   (B) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 1,25 mg KOH / g bis 25 mg KOH /g, bestimmt gemäß DIN EN ISO 2114:2000 (2002-06, Verfahren A mit einem Aceton-Ethanol-Lösungsmittelgemisch), aufweist;
   (C) mindestens ein Polycarbodiimid, und/oder mindestens ein Polyaziridin und/oder eine Mischung davon; und
   (D) gegebenenfalls mindestens ein weiteres Polymer, welches von dem mindestens einen Polymer (A) und dem mindestens einen Polyurethanpolymer (B) verschieden ist.

2. Kit-of-parts zur Herstellung einer Klebstoffformulierung umfassend die folgenden Komponenten:

   (A) mindestens ein Polymer ausgewählt aus der Gruppe bestehend aus Polyurethanpolymeren, Vinylpolymeren, Polyesterpolymeren und / oder Mischungen aus mindestens zwei davon, wobei das Polymer eine partielle Säurezahl von < 1,25 mg KOH / g, bestimmt gemäß DIN EN ISO 2114:2000 (2002-06, Verfahren A mit einem Aceton-Ethanol-Lösungsmittelgemisch), aufweist;
   (B) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 1,25 mg KOH / g bis 25 mg KOH /g, bestimmt gemäß DIN EN ISO 2114:2000 (2002-06, Verfahren A mit einem Aceton-Ethanol-Lösungsmittelgemisch) aufweist;

(C) mindestens ein Polycarbodiimid, mindestens ein Polyaziridin und/oder eine Mischung davon; und
(D) gegebenenfalls mindestens ein weiteres Polymer, welches von dem mindestens einen Polymer (A) und dem mindestens einen Polyurethanpolymer (B) verschieden ist.

**3.** Wässrige Klebstoffformulierung nach Anspruch 1 oder Kit-of-part nach Anspruch 2, wobei das mindestens eine Polymer (A) ausgewählt ist aus der Gruppe bestehend aus Polyurethanpolymeren, Polyacrylatpolymeren, Polymethacrylatpolymeren, Polyvinylacetatpolymeren, Polyesterpolymeren und / oder Mischungen aus mindestens zwei davon, vorzugsweise der Gruppe bestehend aus Polyurethanpolymeren, Polyacrylatpolymeren, Polymethacrylatpolymeren und / oder Mischungen aus mindestens zwei davon besonders bevorzugt mindestens ein Polyurethanpolymer ist.

**4.** Wässrige Klebstoffformulierung nach einem der Ansprüche 1 oder 3 oder Kit-of-part nach einem der Ansprüche 2 oder 3, wobei das mindestens eine Polymer (A) eine partielle Säurezahl im Bereich von 0 mg KOH / g bis 1 mg KOH /g, vorzugsweise im Bereich von 0 mg KOH / g bis 0,05 mg KOH /g, jeweils bestimmt gemäß DIN EN ISO 2114:2000 (2002-06, Verfahren A mit einem Aceton-Ethanol-Lösungsmittelgemisch), aufweist.

**5.** Wässrige Klebstoffformulierung nach einem der Ansprüche 1, 3 oder 4 oder Kit-of-part nach einem der Ansprüche 2 bis 4, wobei das durchschnittliche Molekulargewicht (Mw) von Polymer (A) ≥ als das durchschnittliche Molekulargewicht (Mw) von Polyurethanpolymer (B) ist, vorzugsweise das durchschnittliche Molekulargewicht (Mw) von Polymer (A) größer als das durchschnittliche Molekulargewicht (Mw) von Polyurethanpolymer (B) ist, jeweils bestimmt gemäß DIN EN ISO 13885-2 (2021-11) mit N,N-Dimethlyacetamid als Eluent und Polystyrol als Standard.

**6.** Wässrige Klebstoffformulierung nach einem der Ansprüche 1 oder 3 bis 5 oder Kit-of-part nach einem der Ansprüche 2 bis 5, wobei das mindestens eine Polymer (A) ein durchschnittliches Molekulargewicht (Mw) im Bereich von 70.000 g/mol bis 350.000 g/mol, vorzugsweise im Bereich von 100.000 g/mol bis 350.000 g/mol, besonders bevorzugt im Bereich von 200.000 g/mol bis 350.000 g/mol, noch bevorzugter im Bereich von 300.000 g/mol bis 350.000 g/mol aufweist, bestimmt gemäß DIN EN ISO 13885-2 (2021-11) mit N,N-Dimethlyacetamid als Eluent und Polystyrol als Standard.

**7.** Wässrige Klebstoffformulierung nach einem der Ansprüche 1 oder 3 bis 6 oder Kit-of-part nach einem der Ansprüche 2 bis 6, wobei das mindestens eine Polyurethanpolymer (B) ein durchschnittliches Molekulargewicht (Mw) im Bereich von 20.000 g/mol bis 300.000 g/mol, vorzugsweise im Bereich von 20.000 g/mol bis 200.000 g/mol, besonders bevorzugt im Bereich von 20.000 g/mol bis 100.000 g/mol, noch bevorzugter im Bereich von 40.000 g/mol bis 80.000 g/mol aufweist, jeweils bestimmt gemäß DIN EN ISO 13885-2 (2021-11) mit N,N-Dimethlyacetamid als Eluent und Polystyrol als Standard.

**8.** Wässrige Klebstoffformulierung nach einem der Ansprüche 1 oder 3 bis 7 oder Kit-of-part nach einem der Ansprüche 2 bis 7, wobei das Polyurethanpolymer (B) eine partielle Säurezahl im Bereich von 2,5 mg KOH / g bis 25 mg KOH /g, vorzugsweise im Bereich von 2,5 mg KOH / g bis 12,5 mg KOH /g aufweist, jeweils bestimmt gemäß DIN EN ISO 2114:2000 (2002-06, Verfahren A mit einem Aceton-Ethanol-Lösungsmittelgemisch).

**9.** Wässrige Klebstoffformulierung nach einem der Ansprüche 1 oder 3 bis 8, wobei die wässrige Klebstoffformulierung eine partielle Säurezahl im Bereich von 0,5 mg KOH / g bis 10 mg KOH /g, vorzugsweise im Bereich von 1,0 mg KOH / g bis 10 mg KOH /g, besonders bevorzugt im Bereich von 2 mg KOH / g bis 6 mg KOH /g aufweist, bestimmt gemäß DIN EN ISO 2114:2000 (2002-06, Verfahren A mit einem Aceton-Ethanol-Lösungsmittelgemisch).

**10.** Wässrige Klebstoffformulierung einem der Ansprüche 1 oder 3 bis 9 oder Kit-of-part nach einem der Ansprüche 2 bis 8, wobei das mindestens eine Polymer (A) eine Glasübergangstemperatur von im Bereich von -100 °C bis 0 °C aufweist bestimmt gemäß DSC (differential scanning calometry) DIN EN ISO 11357-1 (2017-02) und bevorzugt mindestens ein teilkristallines Polyurethanpolymer ist mit einer Schmelztemperatur im Bereich von 35 bis 80 °C und einer Schmelzenthalpie von ≥ 15 J/g, jeweils bestimmt mittels DSC bei einer Aufheizrate von 20 K/min gemäß DIN EN ISO 11357-1:2017-02.

**11.** Wässrige Klebstoffformulierung nach einem der Ansprüche 1 oder 3 bis 10 oder Kit-of-part nach einem der Ansprüche 2 bis 8 oder 10, wobei Komponente (C) mindestens ein Polycarbodiimid ist und bevorzugt ein durchschnittliches Molekulargewicht (Mw) im Bereich von 500 g/mol bis 50.000 g/mol, besonders bevorzugt im Bereich von 1.000 g/mol bis 20.000 g/mol, noch bevorzugter im Bereich von 2.000 g/mol bis 5.000 g/mol aufweist, bestimmt gemäß DIN EN ISO 13885-2 (2021-11) mit N,N-Dimethlyacetamid als Eluent und Polystyrol als Standard.

**12.** Wässrige Klebstoffformulierung einem der Ansprüche 1 oder 3 bis 11 oder Kit-of-part nach einem der Ansprüche 2 bis 8, 10 oder 11, wobei die mindestens eine Komponente C) ein Polycarbodiimid ist und eine Glasübergangstemperatur von im Bereich von -100 °C bis 50 °C aufweist, bevorzugt im Bereich von - 60 °C bis 35 °C, besonders bevorzugt im Bereich von - 60 °C bis 30 °C, noch bevorzugter im Bereich von -50 °C bis 29 °C bestimmt gemäß DSC (differential scanning calometry) DIN EN ISO 11357-1 (2017-02).

**13.** Wässrige Klebstoffformulierung nach einem der Ansprüche 1 oder 3 bis 12 oder Kit-of-part nach einem der Ansprüche 2 bis 8 oder 10 oder 12, wobei das molare Verhältnis von Carbodiimidgruppen (-N=C=N-) in der Komponente C) zu den Carboxylgruppen (-COOH) in der Komponente (B) im Bereich von 0,2:1 bis 5:1, bevorzugt im Bereich von 0,5 bis 2,9:1 ist.

**14.** Wässrige Klebstoffformulierung nach einem der Ansprüche 1 oder 3 bis 13, wobei die wässrige Klebstoffformulierung

(A) 5 Gew.-% bis 85 Gew.-%, vorzugsweise 27 Gew.-% bis 80 Gew.-%, der Komponente (A),
(B) 10 Gew.-% bis 70 Gew.-%, vorzugsweise 17 Gew.-% bis 70 Gew.-%, der Komponente (B),
(C) 1 Gew.-% bis 30 Gew.-%, vorzugsweise 3 Gew.-% bis 20 Gew.-%, der Komponente (C), und
(D) 0 Gew.-% bis 30 Gew.-%, vorzugsweise 0 Gew.-% bis 25 Gew.-%, der Komponente (D),

enthält und sich die Mengenanteile von (A), (B), (C) und (D) zu 100 Gew.-% addieren.

**15.** Wässrige Klebstoffformulierung nach einem der Ansprüche 1 oder 3 bis 14, wobei die Summe der Mengen an den Komponenten (A), (B), (C) und gegebenenfalls (D) mindestens 30 Gew.-%, vorzugsweise im Bereich von 30 Gew.-% bis 70 Gew.-%, besonders bevorzugt im Bereich von 35 Gew.-% bis 65 Gew.-%, noch bevorzugter im Bereich von 35 Gew.-% bis 65 Gew.-% ist, bezogen auf das Gesamtgewicht der wässrigen Klebstoffformulierung.

**16.** Wässrige Klebstoffformulierung nach einem der Ansprüche 1 oder 3 bis 15, wobei die wässrige Klebstoffformulierung weiterhin gegebenenfalls mindestens einen Zusatzstoff enthält, der verschieden von den Komponenten (A), (B), (C) und (D) ist.

**17.** Verfahren zur Herstellung einer wässrigen Klebstoffformulierung in Form einer wässrigen Dispersion nach einem der Ansprüche 1 oder 3 bis 16, umfassend mindestens die Schritte:

i) Bereitstellen der Komponenten (A), (B), (C), gegebenenfalls (D), gegebenenfalls mindestens ein Zusatzstoff und gegebenenfalls ein wässriges Medium, wobei die Komponenten (A), (B), (C) und gegebenenfalls (D) jeweils unabhängig voneinander als wässrige Dispersion vorliegen können, und
ii) Mischen der in Schritt i) bereitgestellten Komponenten sowie des gegebenenfalls mindestens einen Zusatzstoffs und gegebenenfalls Dispergieren in einem wässrigen Medium, um eine wässrige Klebstoffformulierung in Form einer wässrigen Dispersion zu erhalten.

**18.** Verfahren zur Herstellung einer Klebung von mindestens einem Substrat, **dadurch gekennzeichnet, dass** eine wässrige Klebstoffformulierung nach einem der Ansprüche 1 oder 3 bis 16 auf mindestens ein Substrat appliziert, dann getrocknet und gegebenenfalls auf eine Temperatur im Bereich von 40 °C bis 200°C, bevorzugt von 50 bis 120 °C, besonders bevorzugt von 55 bis 100 °C erhitzt wird und anschließend ein Kleben erfolgt.

**19.** Verwendung der wässrigen Klebstoffformulierung nach einem der Ansprüche 1 oder 3 bis 16 zur Herstellung von latent-reaktiven Klebstoffschichten, selbstragenden, latent-reaktiven Klebstofffilmen und latent-reaktiven Klebstoffpulvern.

**20.** Verwendung der wässrigen Klebstoffformulierung nach einem der Ansprüche 1 oder 3 bis 16 zum Kleben von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zum Kleben von Schaumstoffen in der Matratzen-, Möbel- und/oder Polsterherstellung.

**21.** Artikel hergestellt unter Verwendung der wässrigen Klebstoffformulierung nach einem der Ansprüche 1 oder 3 bis 16, wobei der Artikel vorzugsweise ein mit thermoplastischer Folie laminiertes Formteil, vorzugsweise aus Kunststoff, Holz oder einem Holzwerkstoff wie beispielsweise MDF ist.

Europäisches Patentamt
European Patent Office
Office européen des brevets

# EUROPÄISCHER RECHERCHENBERICHT

Nummer der Anmeldung
EP 23 17 5386

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2020/216680 A1 (COVESTRO INTELLECTUAL PROPERTY GMBH & CO KG [DE]) 29. Oktober 2020 (2020-10-29) * Seite 3, Zeile 13 - Zeile 17 * ----- | 1-21 | INV. C08G18/08 C08G18/12 C08G18/28 C08G18/32 C08G18/38 C08G18/42 C08G18/72 C08G18/79 C08L75/06 C09J175/06 |
| Y | US 6 797 764 B2 (OLIN CORP [US]) 28. September 2004 (2004-09-28) * Zeile 57, Absatz 3 - Zeile 67; Anspruch 1 * * Zeile 19, Absatz 4 - Zeile 24 * ----- | 1-21 | |
| Y | US 2016/168434 A1 (CARLSON BRIAN W [US] ET AL) 16. Juni 2016 (2016-06-16) * Absatz [0002]; Anspruch 1; Beispiele 1-3; Tabelle 2 * ----- | 1-21 | |

RECHERCHIERTE SACHGEBIETE (IPC)

C08G
C08L
C09J

Der vorliegende Recherchenbericht wurde für alle Patentansprüche erstellt

1

| Recherchenort | Abschlußdatum der Recherche | Prüfer |
|---|---|---|
| München | 18. Oktober 2023 | Scheuer, Sylvie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 23 17 5386

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2023

| Im Recherchenbericht angeführtes Patentdokument | Datum der Veröffentlichung | Mitglied(er) der Patentfamilie | Datum der Veröffentlichung |
|---|---|---|---|
| WO 2020216680 A1 | 29-10-2020 | CN 113710717 A | 26-11-2021 |
| | | EP 3730528 A1 | 28-10-2020 |
| | | EP 3959251 A1 | 02-03-2022 |
| | | JP 2022530013 A | 27-06-2022 |
| | | KR 20220005459 A | 13-01-2022 |
| | | US 2022177751 A1 | 09-06-2022 |
| | | WO 2020216680 A1 | 29-10-2020 |
| US 6797764 B2 | 28-09-2004 | KEINE | |
| US 2016168434 A1 | 16-06-2016 | CN 105694792 A | 22-06-2016 |
| | | CN 105694793 A | 22-06-2016 |
| | | HK 1224319 A1 | 18-08-2017 |
| | | HK 1224320 A1 | 18-08-2017 |
| | | TW 201629178 A | 16-08-2016 |
| | | TW 201629179 A | 16-08-2016 |
| | | US 2016168423 A1 | 16-06-2016 |
| | | US 2016168434 A1 | 16-06-2016 |
| | | WO 2016100344 A1 | 23-06-2016 |
| | | WO 2016100350 A1 | 23-06-2016 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4870129 A
- US 6348548 B
- WO 2020035573 A1
- US 20110244228 A
- CN 106916273
- EP 2186841 A1
- US 6797764 B2
- US 20160168434 A1
- US 20220177751 A1
- EP 0916647 A
- DE 2446440 A
- EP 3502157 A1
- EP 3795601 A1
- EP 2552982 A2
- WO 2020216680 A1


### In der Beschreibung aufgeführte Nicht-Patentliteratur


- **MEIER-WESTHUES et al.** Polyurethanes. Vincentz Network, 2019, 342-343